# EUROPEAN PATENT SPECIFICATION

(11) **EP 4 485 887 B1**
(45) Date of publication and mention of the grant of the patent: **09.12.2026**
(21) Application number: 23778045.7
(22) Date of filing: 24.03.2023
(51) Int. Cl.: H04L 45/16

(54) **DEVICE LARGE NETWORK ROUTING METHOD AND ROUTING DEVICE**
ROUTINGVERFAHREN FÜR GROSSE NETZWERKVORRICHTUNGEN UND ROUTINGVORRICHTUNG
PROCÉDÉ DE ROUTAGE DE GRAND RÉSEAU DE DISPOSITIF ET DISPOSITIF DE ROUTAGE

(30) Priority: 02.04.2022 CN 202210340647
(43) Date of publication of application: 01.01.2025
(73) Proprietor: Huawei Technologies Co., Ltd., Shenzhen, Guangdong 518129 (CN)
(72) Inventor: XIE, Gang, Shenzhen, Guangdong 518129 (CN); LI, Ping, Shenzhen, Guangdong 518129 (CN); CHEN, Yixiao, Shenzhen, Guangdong 518129 (CN)
(74) Representative: Grünecker Patent- und Rechtsanwälte PartG mbB
(86) International application number: PCT/CN2023/083687
(87) International publication number: WO 2023/185677

(56) References cited:
- CN-A- 104 579 872
- CN-A- 112 910 689
- CN-A- 113 872 868
- US-A1- 2020 136 864
- SULAIMAN T H ET AL: "Centralised Link-State Routing in ZRP", PERSONAL, INDOOR AND MOBILE RADIO COMMUNICATIONS, 2006 IEEE 17TH INTER NATIONAL SYMPOSIUM ON, IEEE, PI, 1 September 2006 (2006-09-01), pages 1 - 5, XP031023460, ISBN: 978-1-4244-0329-5, DOI: 10.1109/PIMRC.2006.254164
- KOYAMA A ET AL: "EZRP: an enhanced zone-based routing protocol for ad-hoc networks", CONCURRENCY AND COMPUTATION: PRACTICE AND EXPERIENCE, WILEY, LONDON, GB, vol. 19, no. 8, 3 April 2007 (2007-04-03), pages 1157 - 1170, XP072308789, ISSN: 1532-0626, DOI: 10.1002/CPE.1161

## Description

### TECHNICAL FIELD

This application relates to the optical communication field, and more specifically, to a large-scale networking routing method and a routing device.

### BACKGROUND

Currently, large-scale networking covers provincial backbone and city core/aggregation/access and high-end edge customer premises equipment (customer premises equipment, CPE), and gradually evolves to a scale of tens of thousands of network nodes. Hardware devices on a backbone core network and a metropolitan area aggregation network have strong capabilities, and hardware devices on an edge access network have weak capabilities.
SULAIMAN T H ET AL: "Centralised Link-State Routing in ZRP", PERSONAL, INDOOR AND MOBILE RADIO COMMUNICATIONS, 2006 IEEE 17TH INTER NATIONAL SYMPOSIUM ON, IEEE, PI, 1 September 2006, pages 1-5, disclose a technique of routing zone creation in the context of a Zone Routing Protocol (ZRP) based on super-node selection.
KOYAMA A ET AL: "EZRP: an enhanced zone-based routing protocol for ad- hoc networks", CONCURRENCY AND COMPUTATION: PRACTICE AND EXPERIENCE, WILEY, LONDON, GB, vol. 19, no. 8, 3 April 2007, pages 1157-1170, disclose an Enhanced Zone Routing Protocol wherein each node calculates the reliability of a route and if it is determined to be reliable a source node can directly use that route for data packet transfer.

As service requirements continuously increase, an ultra-large-scale network covers a large quantity of edge devices. In conventional open shortest path first (open shortest path first, OSPF) network-wide flooding, each node needs to maintain a network-wide routing table and a next hop forwarding table of all neighbors, which has a high requirement on hardware of a network-wide device. In addition, network route convergence is slow, causing a delay in service communication and affecting normal communication between devices.

Therefore, how to effectively improve route convergence performance and achieve quick reachability of a network-wide route is an urgent problem to be resolved.

### SUMMARY

The invention is defined by the independent claims. Further embodiments of the invention are defined by the dependent claims. The invention allows to effectively improve route convergence performance and achieve quick reachability of a network-wide route.

### BRIEF DESCRIPTION OF DRAWINGS

FIG. 1 is a schematic diagram of area division and domain division based on an open shortest path first routing protocol according to an embodiment of this application;
FIG. 2 is a schematic diagram that is based on a wireless ad hoc on-demand distance vector routing request according to an embodiment of this application;
FIG. 3 is a schematic diagram of an architecture of a zone routing protocol according to an embodiment of this application;
FIG. 4 is a schematic diagram of an algorithm topology structure according to an embodiment of this application;
FIG. 5 is a schematic diagram of comparison between open shortest path first network-wide flooding and edge reactive routing according to an embodiment of this application;
FIG. 6A to FIG. 6C are a schematic flowchart of a large-scale networking routing method according to an embodiment of this application;
FIG. 7 is a schematic diagram of a network architecture for implementing a large-scale networking routing method according to an embodiment of this application;
FIG. 8A and FIG. 8B are a schematic flowchart of another large-scale networking routing method according to an embodiment of this application;
FIG. 9 is a schematic diagram of another network architecture for implementing a large-scale networking routing method according to an embodiment of this application;
FIG. 10 is a schematic flowchart of still another large-scale networking routing method according to an embodiment of this application;
FIG. 11 is a schematic diagram of a structure of a routing device according to an embodiment of this application; and
FIG. 12 is a schematic diagram of a structure of another routing device according to an embodiment of this application.

### DESCRIPTION OF EMBODIMENTS

The following describes technical solutions of embodiments of this application with reference to accompanying drawings.

Embodiments of this application may be applied to an optical communication system. The optical communication systemincludes but is not limited to an optical fiber communication system such as an optical access network (optical access network, OAN), short-distance optical interconnection, an optical transport network (optical transport network, OTN), a passive optical network (passive optical network, PON), or a wavelength division multiplexing (wavelength division multiplexing, WDM) network.

For ease of understanding of embodiments of this application, some concepts in this application are first briefly described.

### 1. Customer premises equipment CPE

The CPE is a mobile signal access device that receives a mobile signal and forwards the mobile signal in a form of a wireless Wi-Fi signal. The CPE may convert high-speed 4G/5G signals into Wi-Fi signals, and there are a large quantity of mobile terminals that can support to access the internet simultaneously. The CPE may be widely used in rural areas, towns, hospitals, organizations, factories, and residential communities. The CPE can be used for wireless network access, so that broadband costs can be reduced and cabling is not needed.

### 2. Open shortest path first OSPF

An OSPF protocol is a link-state routing protocol used in an internet protocol (internet protocol, IP) network, and has advantages of fast convergence of route changes, no routing loop, supporting variable length subnet mask and summarization, layer and area division, and the like. Each router is responsible for discovering and maintaining a relationship with a neighbor of the router, and describing a known neighbor list and link state update (link state update, LSU) packets. Each router periodically interacts with another router in an autonomous system (autonomous system, AS) through reliable flooding to learn of a network topology structure of the entire autonomous system. In addition, each router injects route information of another AS by using a router at a border of the autonomous system, to obtain route information of an entire network. A link-state advertisement (link-state advertisement, LSA) is regenerated at a specified interval or when a link state changes. The router advertises the new LSA through a flooding mechanism to update a route in real time.

### 3. Wireless ad hoc on-demand distance vector routing (ad hoc on-demand distance vector routing, AODV) protocol

AODV is a routing protocol used in a wireless ad hoc network for route selection. AODV can implement unicast and multicast routing. This protocol is a typical protocol for generating a route on demand in the ad hoc network.

When a network resource is abundant, the AODV protocol can periodically broadcast a hello packet to maintain a route. Once a link is found disconnected, a node sends an ERROR packet to notify a node, which is unreachable due to link disconnection, to delete a corresponding record or repair the existing route.

### 4. Mflood (mflood) routing algorithm

A basic idea of the mflood routing algorithm is that each node forwards a received data packet through broadcasting and discards a received duplicate packet. The mflood algorithm is that two adjacent network elements flood a route to each other. An identifier of the network element and a learned routing entry are flooded to an adjacent network element. After receiving the flooded route, the adjacent network element saves the learned route to a routing table and floods the routing table of the adjacent network element until all network elements in a network complete route flooding.

With increasing demand of people for data services, an optical communication technology develops rapidly. In particular, a future large-scale network is to achieve one network for a whole province, and to cover a provincial backbone and city core network/aggregation network/access network and high-end CPE. The network will gradually evolve to a scale of tens of thousands of network nodes. A hardware device on a backbone core network and a metropolitan area aggregation network has strong capabilities, and a hardware device on an edge CPE access network has weak capabilities.

However, in this implementation, a plurality of areas (areas) of a network need to be obtained through manual division, and a large quantity of configuration also needs to be performed. In addition, after network upgrade, area division and resource configuration still need to be readjusted. Currently, there is no good automation solution, and this increases difficulty in system maintenance. After a network is flattened, it may be difficult to clearly perform division of areas (for example, an area 0 and an area 1). Based on a plurality of domains (domains), a border gateway protocol (border gateway protocol, BGP) needs to be introduced. As a path-vector (path-vector) routing protocol, the BGP enables network configuration and maintenance to be more complex. After a link fault occurs, route information needs to be flooded to all nodes in a domain, and convergence takes dozens of seconds. Slow route convergence performance severely affects normal communication between a control unit and the network elements.

In conclusion, when an ultra-large-scale network covers a large quantity of edge devices, route convergence performance of the entire network may fail to meet requirements. Therefore, it is important to improve the route convergence performance of the network, ensure fast communication between the network elements, and achieve reachability of a network-wide route in the network in the scale of tens of thousands of nodes.

Currently, to avoid the foregoing problem, there are several solutions as follows.

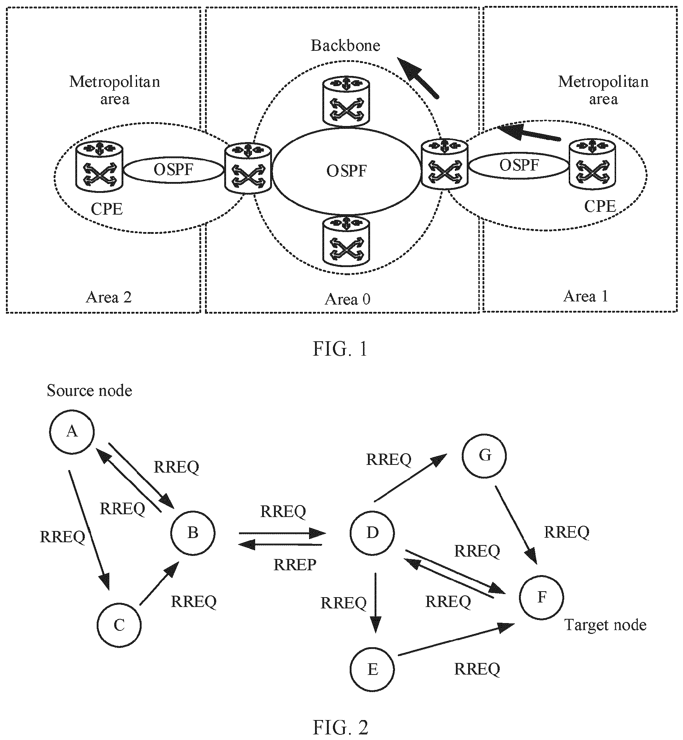

FIG. 1 is a schematic diagram of area division and domain division based on an OSPF routing protocol according to an embodiment of this application. As shown in FIG. 1, large-scale networking includes a backbone network and a metropolitan area network, and supports a multi-area and a multi-domain network. In each metropolitan area, each network element runs the OSPF protocol and only routing table information in the area is maintained. In a backbone area, a network-wide routing table information is maintained. A node identifier may be planned by network segments for each independent subnet/area/domain, and abundant IP is reserved for an expanded network element in the area.

However, in this implementation, a plurality of areas of the network need to be obtained through manual division, and a large quantity of configuration also needs to be performed. After network upgrade, area division and resource configuration still need to be readjusted. Currently, there is no good automation solution, and this increases difficulty in system maintenance. The node identifier (node ID) needs to be planned and rectified in advance, and this does not adapt to an existing network.

FIG. 2 is a schematic diagram that is based on an AODV routing request according to an embodiment of this application. As shown in FIG. 2, a node does not store a local routing table, and a network is not required to establish a route before node communication. The route is established when the node needs to communicate, and the route is not maintained when no communication is performed.

For example, when there is a transmission requirement, a source node (for example, A) sends a flooding route request (route request, RREQ) packet through broadcasting, and records a transmission path (which may include a plurality of transmission paths). The RREQ packet includes an IP address of the source node. When receiving the RREQ packet, adjacent nodes (for example, B and C) first determine whether destination nodes are the adjacent nodes. If yes, the adjacent nodes send a route reply (route reply, RREP) packet to the source node (for example, A) in unicast mode. If not, the adjacent nodes first query a routing table for whether there is a route to the destination node; if yes, the adjacent nodes send the RREP to the source node (for example, A) along a smallest-cost path in the unicast mode; otherwise, the adjacent nodes continue to broadcast the RREQ for querying until the flooding route request reaches the destination node (for example, F). The destination node (for example, F) selects an optimal path from the plurality of transmission paths, and replies to the routing request based on the optimal path. Specifically, the transmission path includes A-B-D-F, A-B-D-E-F, A-B-D-G-F, A-C-B-D-E-F, A-C-B-D-E-F and A-C-B-D-G-F. The destination node F selects an optimal path F-D-B-A, and completes sending of the reply to the routing request.

In this implementation, a delay in a route establishment process is excessively high, especially in a scenario in which a network scale is large or there are a large quantity of communication nodes in the network. In addition, control overheads and node storage overheads are large. When a network topology changes frequently, network route convergence performance is not ideal. This implementation is applicable only to a scenario with a low delay requirement.

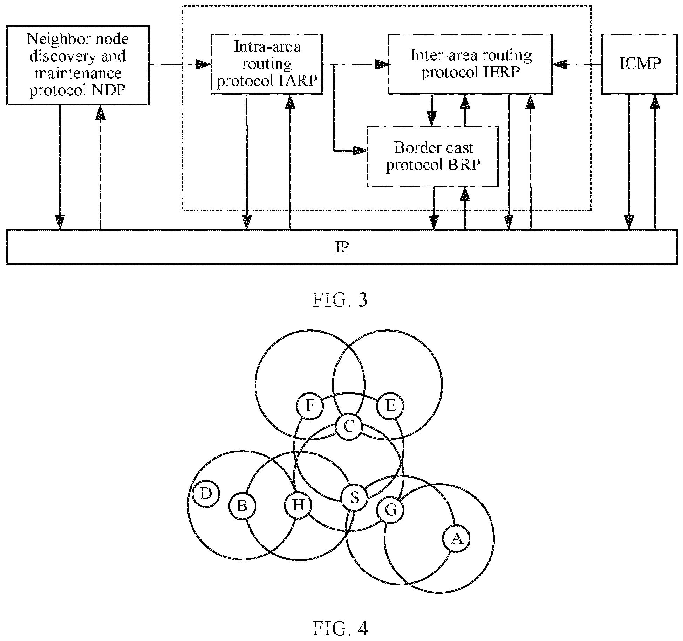

FIG. 3 is a schematic diagram of an architecture of a zone routing protocol (zone routing protocol, ZRP) according to an embodiment of this application. As shown in FIG. 3, ZRP combines an on-demand routing protocol and an active routing protocol through area radius division, and combines technical advantages of the active and on-demand routing protocols.

Specifically, a node uses active routing (intra-area routing protocol (intra-area routing protocol, IARP)) for intra-area communication in a preset area range, to reduce occurrence of invalid routing and a routing loop. On-demand routing (inter-area routing protocol (inter-area routing protocol, IERP)) is used for inter-area communication, and a routing table does not need to be maintained in real time. When a destination node is not in the area, a border cast resolution protocol (border cast resolution protocol, BRP) mode is used. A request packet is sent to an edge node in the area to cyclically query in sequence continuously until a route is found.

In addition, the ZRP routing protocol further includes a neighbor discovery protocol (neighbor discovery protocol, NDP) and an internet control message protocol (internet control message protocol, ICMP).

It should be noted that the active routing protocol needs to send a large quantity of routing control packets, and signaling overheads are high. When a network scale and mobility increase to a specific extent, most active routing protocols will not be feasible. The on-demand routing protocol needs to obtain route information in advance before data transmission, so that a specific transmission delay exists. Therefore, the on-demand routing protocol is applicable to a scenario in which network load is not heavy and a node moving speed is not high.

FIG. 4 is a schematic diagram of an algorithm topology structure according to an embodiment of this application. As shown in FIG. 4, all nodes in a network have a virtual area centered on the node, and a quantity of nodes in the area is related to a specified area radius. Performance of ZRP depends on a parameter value of an area radius. The area radius is determined based on network characteristics (such as a node density and a node speed).

For example, the entire network is divided into several virtual areas that are centered on the node (for example, A, B, C, D, E, F, G, H or S) and that have a preset radius, and the quantity of nodes in the area is related to the specified area radius. For example, an area with the node C as a center and R as a radius is E-F-S, and an area with the node S as a center and R as a radius is H-G-C.

In this implementation, the entire network is divided into several virtual areas, so that an area overlapping degree of ZRP is high, node area division is not detailed enough, and there is a repeated or blank area. An algorithm is set excessively simple, and logic needs to be improved. A parameter (a hop count) is set fixed, and dynamic adaptability is not strong. In addition, a packet needs to be broadcast periodically, and this consumes battery energy and a network bandwidth. Route forwarding efficiency is low, and a redundant route may also be generated.

In conclusion, for a large-scale networking, how to improve route convergence performance, ensure fast communication between devices, and achieve reachability of a network-wide route in a network in a scale of tens of thousands of nodes is an urgent technical problem to be resolved.

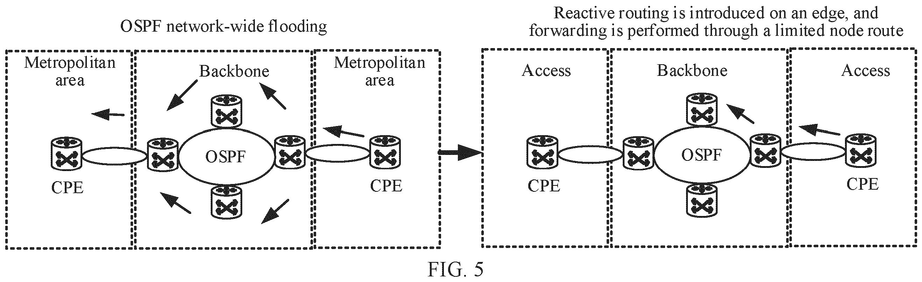

FIG. 5 is a schematic diagram of comparison between OSPF network-wide flooding and edge reactive routing according to an embodiment of this application. As shown in FIG. 5, a large-scale network of devices is deployed in a whole province, including a backbone network, a metropolitan area network, and an edge CPE access network.

In conventional OSPF network-wide flooding, each node needs to maintain a network-wide routing table and a next hop forwarding table of all neighbors. A network with 10,000 nodes (with 10 to 50 neighbors) is used as an example. Link state data is usually at a level of 100,000 to 500,000, and a forwarding table is usually at a level of 20,000. The conventional OSPF network-wide flooding has a high requirement on hardware of a network-wide device and also increases device costs. In addition, service convergence performance is slow, and this causes a delay in service communication and cannot meet evolution of a future large-scale network solution.

For example, the edge CPE access network uses a reliable flooding mechanism to send information to all routers in the area. The routers send the information (link state information) to all neighbor routes of the routers through an output port (which is also referred to as a loopback port). Then, each adjacent router forwards the information to a neighbor route of each router, but does not forward the information to the route that just sent the information to the adjacent router. The information is forwarded continuously in this way until each router in the area finally includes information of the entire network.

In view of this, this application is oriented to an ultra-large-scale network, and provides a large-scale networking routing method and a routing device, to be specific, a large-scale networking routing method in which a core uses active routing and an edge uses reactive routing is used, to achieve quick reachability of a network-wide route.

Specifically, a core network node and an edge network node are classified for processing, and the core network node (for example, a CCU/an NCE) performs flooding by using an OSPF protocol, to master a network-wide route. For the edge network node, a reactive routing technology is introduced, to automatically identify a device attribute, and each edge node maintains only a local routing table. This effectively reduces a requirement on storage. In this implementation, a change of an edge network route does not need to be perceived by all other devices in the network. The edge node only needs to communicate with a limited quantity of nodes in the network, to greatly reduce a network flooding amount and ensure availability of a large-scale networking route. This implementation is especially applicable to a scenario in which a large-scale networking with limited storage resources and weak forwarding performance, and an existing network cannot be effectively rectified.

For example, reactive routing is introduced into the edge CPE access network, for a CO node, carried information is forwarded to the CCU or the NCE in the backbone core network through a limited node route, and another node does not need to perceive related information. Alternatively, for an edge CO node, carried information is forwarded to another CO node through a limited node route, and another node at a core layer or an aggregation layer of the metropolitan area network does not need to perceive related information.

For ease of understanding embodiments of this application, the following points are further described.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" is an association relationship for describing associated objects and represents that three relationships may exist. For example, A and/or B may represent the following three cases: Only A exists, both A and B exist, and only B exists. A and B may be singular or plural. In text descriptions of this application, the character "/" usually represents an "or" relationship between the associated objects.

In this application, "indicate" may include "directly indicate" and "indirectly indicate". When a piece of indication information indicates A, the indication information may directly indicate A or indirectly indicate A, but it does not indicate that the indication information definitely carries A.

In addition, specific indication manners may alternatively be various existing indication manners, for example, but not limited to, the foregoing indication manners and various combinations thereof. For details of the various indication manners, refer to a conventional technology. Details are not described in this specification. It can be learned from the foregoing descriptions that, for example, when a plurality of pieces of information of a same type need to be indicated, different indication information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

It may be understood that terms "first", "second", and various sequence numbers in the following embodiments are merely used for differentiation for ease of description, but are not intended to limit the scope of embodiments of this application. The sequence numbers of the following processes do not mean execution sequences. The execution sequences of the processes need to be determined based on functions and internal logic of the processes, and should not constitute any limitation on implementation processes of embodiments of this application.

In embodiments of this application, descriptions such as "when... ", "in a case of...", and "if" all mean that the device performs corresponding processing in an objective case, and are not limited to time, and the device is not required to perform a determining action during implementation. This does not mean that there is another limitation.

The technical solutions provided in this application are described in detail below with reference to the accompanying drawings.

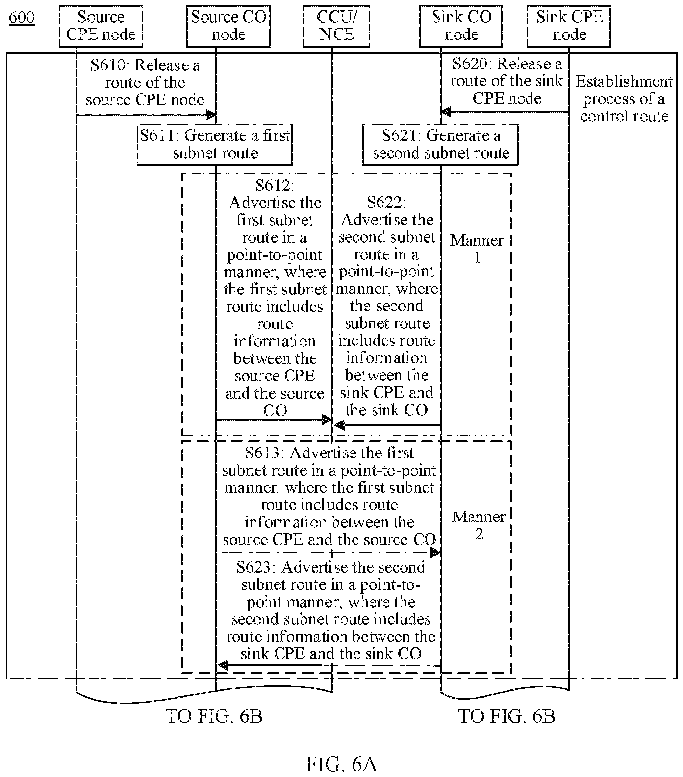

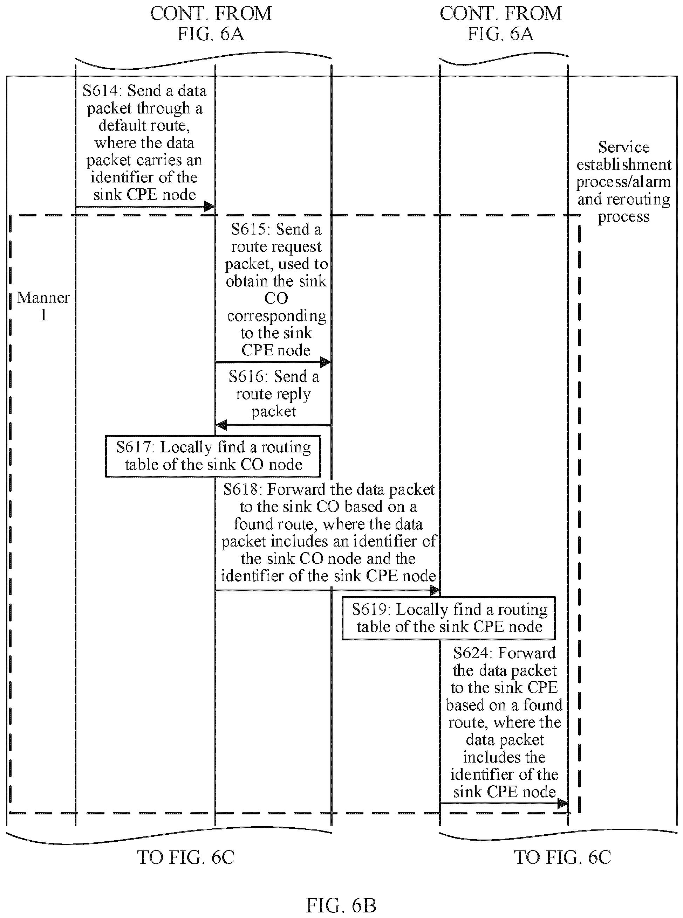

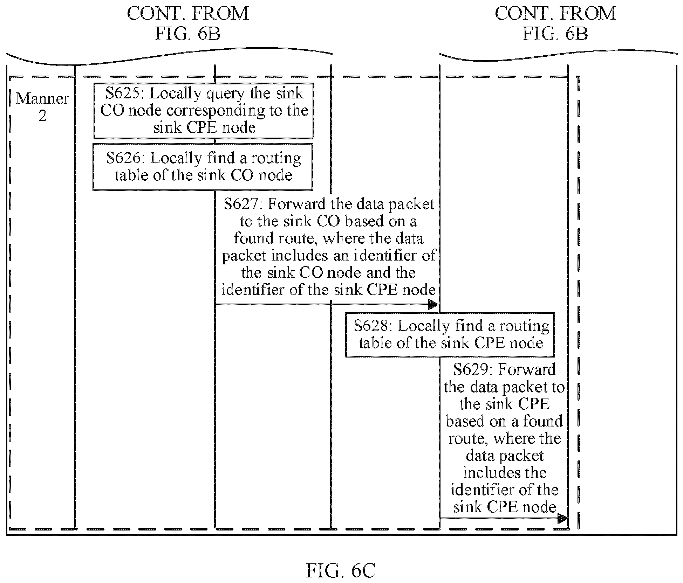

FIG. 6A to FIG. 6C are a schematic flowchart of a large-scale networking routing method according to an embodiment of this application. As shown in FIG. 6A to FIG. 6C, the routing method 600 includes two aspects: route establishment and service request, and specifically includes the following plurality of steps.

S610: A source CPE node releases a route of the source CPE node.

Correspondingly, a source CO node receives the route from the source CPE node.

In a possible implementation, the source CPE node runs an OSPF dynamic routing mechanism, and floods a source CPE node attribute to the source CO node through all neighbors.

It should be understood that a neighboring node of the source CPE node may be a CO node, or may be another CPE node, or may include both the CO node and the CPE node. This is not specifically limited in this application.

It should be noted that, the method is applied to large-scale networking, where the large-scale networking includes a backbone core network, a metropolitan area aggregation network, and an edge CPE access network. The metropolitan area aggregation network includes a first metropolitan area aggregation network and a second metropolitan area aggregation network, and the edge CPE access network includes a first edge CPE access network and a second edge CPE access network. The backbone core network is a mesh network structure and has no clear physical characteristic boundary. The edge CPE access network includes a series of independent subnets in a ring/chain or star structure. A single subnet is small in scale but there are a large quantity of subnets. Therefore, a total scale of an edge area is large.

Optionally, the backbone core network and the metropolitan area aggregation network use an OSPF network-wide flooding routing protocol. This is not specifically limited in this application.

For example, a border network element between the backbone core network and the metropolitan area aggregation network is an ABR, and a border network element between the metropolitan area aggregation network and the edge CPE access network is ASBR, that is, the CO node.

It should be noted that the source CO node is set in advance or automatically identified as a border network element between the first metropolitan area aggregation network and the first edge CPE access network. This is not specifically limited in this application.

S611: The source CO node generates a first subnet route.

The source CO node is the border network element between the first metropolitan area aggregation network and the first edge CPE access network, and the source CO node is set in advance or automatically identified as the border network element. This is not specifically limited in this application.

In a possible implementation, after the source CPE node goes online, the source CO node actively discovers the route of the source CPE to generate route information between the source CPE node and the source CO node.

It should be understood that one or more CPE nodes may be connected to the source CO node, and an OSPF small domain, that is, the first edge CPE access network, is formed between the plurality of CPE nodes and the source CO node. In this case, after the plurality of CPE nodes go online in sequence, the source CO node may correspondingly generate route information between different CPE nodes and the source CO node, to form the first subnet route, that is, intra-domain route information of an OSPF small domain #1.

The first subnet route refers to a route of the first edge CPE access network, and may be the route information between one or more source CPE nodes and the source CO node, that is, the plurality of source CPE nodes may be connected to one source CO node. A quantity of source CPE nodes and a quantity of source CO nodes are not specifically limited in this application.

It should be noted that the source CPE node may be connected to one or more CO nodes, for example, a source CO node 1 and a source CO node 2. Then, after the source CPE node releases the route, the source CO node 1 and the source CO node 2 respectively generate a route between the source CPE node and the source CO node 1, and a route between the source CPE node and the source CO node 2, and deliver the routes to the source CPE node. In other words, the source CPE node has at least two pieces of route information.

In a possible implementation, because the plurality of CPE nodes may be connected to the source CO node 1 and the source CO node 2, the CPE may be automatically discovered and a local routing table may be generated. The source CO node 1 and the source CO node 2 may alternatively deliver the local routing table to the source CPE node. This is not limited in this application.

Further, after aggregating route information of the source CPE node, the source CO node may advertise the route information to a CCU/an NCE or another CO node in a point-to-point manner. This is not specifically limited in this application.

In a possible implementation:
S612: The source CO node advertises the first subnet route to the CCU/NCE in the point-to-point manner.

Correspondingly, the CCU/NCE receives the first subnet route from the source CO node in the point-to-point manner.

The first subnet route is route information of the first edge CPE access network, the first subnet route includes the route information between the source CPE node and the source CO, and the CCU belongs to the backbone core network.

In this implementation, after aggregating an intra-domain route of OSPF, the source CO node may forward the first subnet route to the CCU/NCE in the point-to-point manner, to avoid problems such as a high delay and slow route convergence caused by network-wide flooding. Therefore, another node does not need to perceive the first subnet route, and the CCU/NCE of the entire large-scale networking has a network-wide route.

By way of example but not limitation, when the first subnet route changes, the source CO node updates the first subnet route, and the source CO node sends an updated first subnet route to the CCU or the NCE.

In this implementation, each edge node maintains only the local routing table, to effectively reduce a requirement on storage. Perception by all other devices in the network is not needed, to greatly reduce a network flooding amount and ensure availability of a large-scale networking control route.

In another possible implementation:
S613: The source CO node advertises the first subnet route to the sink CO node in the point-to-point manner.

Correspondingly, the sink CO node receives the first subnet route from the source CO node in the point-to-point manner.

In this implementation, after aggregating an intra-domain route of OSPF, the source CO node may advertise the first subnet route to the sink CO node (in other words, another CO node) in the point-to-point manner, to avoid problems such as a high delay and slow route convergence caused by network-wide flooding. Therefore, another node at a core layer and a metropolitan area aggregation layer does not need to perceive the first subnet route, and a distributed CO node of the entire large-scale networking has a network-wide route.

By way of example but not limitation, when the first route changes, the source CO node updates the first subnet route, and the source CO node sends an updated first subnet route to the sink CO node.

In this implementation, each edge node maintains only the local routing table, to effectively reduce a requirement on storage. Perception by all other devices in the network is not needed, to greatly reduce a network flooding amount and ensure availability of a large-scale networking control route.

It should be noted that the foregoing is merely an example for description. A route establishment process between another source CPE node connected to the source CO node and the source CO node is similar to the foregoing steps S610 to S613. For brevity, details are not described herein again.

Similar to the foregoing steps S610 to S613, the following several steps are included in route establishment between the sink CO node and a sink CPE node in the second edge CPE access network.

S620: The sink CPE node releases a route of the sink CPE node.

Correspondingly, the sink CO node receives the route from the sink CPE node.

For example, the sink CPE node is the sink CPE node, and the sink CO node is the sink CO node.

In a possible implementation, the sink CPE node runs an OSPF dynamic routing mechanism, and floods a sink CPE node attribute to the sink CO node through all neighbors.

It should be understood that a neighboring node of the sink CPE node may be the sink CO node, or may be another sink CPE node, or may include both a CO node and a CPE node. This is not specifically limited in this application.

It should be noted that the sink CO node is set in advance or automatically identified as a border network element between the second metropolitan area aggregation network and the second edge CPE access network. This is not specifically limited in this application.

S621: The sink CO node generates a second subnet route.

The sink CO node is the border network element between the second metropolitan area aggregation network and the second edge CPE access network, and the sink CO node is set in advance or automatically identified as the border network element. This is not specifically limited in this application.

In a possible implementation, after the sink CPE node goes online, the sink CO node actively discovers the route of the sink CPE to generate route information between the sink CPE node and the sink CO node.

It should be understood that one or more sink CPE nodes may be connected to the sink CO node, and an OSPF small domain, that is, the second edge CPE access network, is formed between the plurality of sink CPE nodes and the sink CO node. In this case, after the plurality of sink CPE nodes go online in sequence, the sink CO node may correspondingly generate route information between different sink CPE nodes and the sink CO node, to form the second subnet route, that is, intra-domain route information of an OSPF small domain #2.

The second subnet route refers to a route of the second edge CPE access network, and may be the route information between the one or more sink CPE nodes and the sink CO node, that is, the plurality of sink CPE nodes may be connected to one sink CO node. A quantity of sink CPE nodes and a quantity of sink CO nodes are not specifically limited in this application.

It should be noted that the sink CPE node may be connected to one or more CO nodes, for example, a sink CO node 1 and a sink CO node 2. Then, after the sink CPE node releases the route, the sink CO node 1 and the sink CO node 2 respectively generate a route between the sink CPE node and the sink CO node 1, and a route between the sink CPE node and the sink CO node 2, and advertises the routes to the sink CPE node. In other words, the sink CPE node has at least two pieces of route information.

In a possible implementation, because the plurality of CPE nodes may be connected to the sink CO node 1 and the sink CO node 2, the CPE may be automatically discovered and a local routing table may be generated. The sink CO node 1 and the sink CO node 2 may alternatively deliver the local routing table to the sink CPE node. This is not limited in this application.

Further, after aggregating the route information of the sink CPE node, the sink CO node may advertise the route information to a CCU/an NCE or another CO node in a point-to-point manner. This is not specifically limited in this application.

In a possible implementation:
S622: The sink CO node advertises the second subnet route to the CCU/NCE in the point-to-point manner.

Correspondingly, the CCU/NCE receives the second subnet route from the sink CO node in the point-to-point manner.

The second subnet route is route information of the second edge CPE access network, the second subnet route includes the route information between the sink CPE node and the sink CO node.

In this implementation, after aggregating an intra-domain route of OSPF, the sink CO node may advertise the second subnet route to the CCU/NCE in the point-to-point manner, to avoid problems such as a delay and slow route convergence caused by network-wide flooding. Therefore, another node does not need to perceive the second subnet route, and the CCU/NCE node of the entire large-scale networking has a network-wide route.

In another possible implementation:
S623: The sink CO node advertises the second subnet route to the source CO node in a point-to-point manner.

Correspondingly, the source CO node receives the second subnet route from the sink CO node in the point-to-point manner.

In this implementation, after aggregating an intra-domain route of OSPF, the sink CO node may advertise the second subnet route to the source CO node (namely, another CO node) in the point-to-point manner, to avoid problems such as a delay and slow route convergence caused by network-wide flooding. Therefore, another node at a core layer and a metropolitan area aggregation layer does not need to perceive the second subnet route, and a distributed CO node of the entire large-scale networking has a network-wide route.

It should be noted that the foregoing is merely an example for description. A route establishment process between another sink CPE node connected to the sink CO node and the sink CO node is similar to the foregoing steps S620 to S623. For brevity, details are not described herein again.

Based on completion of route establishment of the foregoing large-scale networking, a service establishment request may be performed between different network elements, and specifically includes the following plurality of steps.

For example, the CCU or the NCE delivers the service establishment request to the source CPE, in other words, requests to establish a service between the source CPE node and the sink CPE node.

S614: The source CPE node sends a data packet to the source CO node through a default route.

Correspondingly, a source CO node receives the data packet from the source CPE node.

The data packet carries an identifier of the sink CPE node, and the sink CPE node belongs to the second edge CPE access network.

In this implementation, because the source CPE node does not find the route information of the sink CPE node after locally querying a routing table, the source CPE node stores the route of the first edge CPE access network, that is, the first subnet route. Therefore, the source CPE node may send the default route to the source CO node.

Further, after receiving the data packet sent by the source CPE node, the source CO node needs to obtain route information of the sink CO node corresponding to the sink CPE node, to forward the data packet to the sink CPE node. Two possible implementations are provided below.

In a possible implementation, based on the foregoing step S612 and step S622, the CCU/NCE of the large-scale networking has the network-wide route.

S615: The source CO node sends a route request packet to the CCU or the NCE.

Correspondingly, the CCU or NCE receives the route request packet from the source CO node.

The route request packet is used to request to obtain the sink CO node corresponding to the sink CPE node, and the route request packet includes the identifier of the sink CPE node.

S616: The CCU or the NCE sends a route reply packet to the source CO node.

Correspondingly, the source CO node receives the route reply packet from the CCU or the NCE.

The route reply packet includes an identifier of the sink CO node corresponding to the sink CPE node.

S617: The source CO node locally finds a routing table of the sink CO node.

S618: The source CO node forwards the data packet to the sink CO node based on a found route.

Correspondingly, the sink CO node receives the data packet from the source CO node.

The data packet carries the identifier of the sink CO node and the identifier of the sink CPE node.

S619: The sink CO node locally finds a routing table of the sink CPE node.

S624: The sink CO node forwards the data packet to the sink CPE node based on a found route.

Correspondingly, the sink CPE node receives the data packet from the sink CO node.

The data packet carries the identifier of the sink CPE node.

In another possible implementation, based on the foregoing step S613 and step S623, the distributed CO node of the large-scale networking has the network-wide route. In other words, the source CO node has the route information of the sink CO node corresponding to the sink CPE node. Therefore, the source CO node does not need to actively query the CCU/NCE for a route, and no extra related delay exists in service communication.

S625: The source CO node locally queries the sink CO node corresponding to the sink CPE node.

S626: The source CO node locally finds a routing table of the sink CO node.

S627: The source CO node forwards the data packet to the sink CO node based on a found route.

Correspondingly, the sink CO node receives the data packet from the source CO node.

The data packet carries an identifier of the sink CO node and the identifier of the sink CPE node.

S628: The sink CO node locally finds a routing table of the sink CPE node.

S629: The sink CO node forwards the data packet to the sink CPE node based on a found route.

Correspondingly, the sink CPE node receives the data packet from the sink CO node.

The data packet carries the identifier of the sink CPE node.

In conclusion, in the technical solution of this application, for the edge CPE access network node, a reactive routing technology is introduced, to automatically identify a device attribute, and each node edge maintains only the local routing table, to effectively reduce the requirement on storage. When the route of the edge CPE access network changes, the CO node only needs to communicate with a limited quantity of nodes (such as the CCU/NCE or another CO node) in the network, and perception by all other nodes in the network is not needed. This greatly reduces the network flooding amount and achieves quick reachability of the network-wide route. This solution is especially applicable to a scenario in which a large-scale networking with limited storage resources and weak forwarding performance and an existing network cannot be effectively rectified.

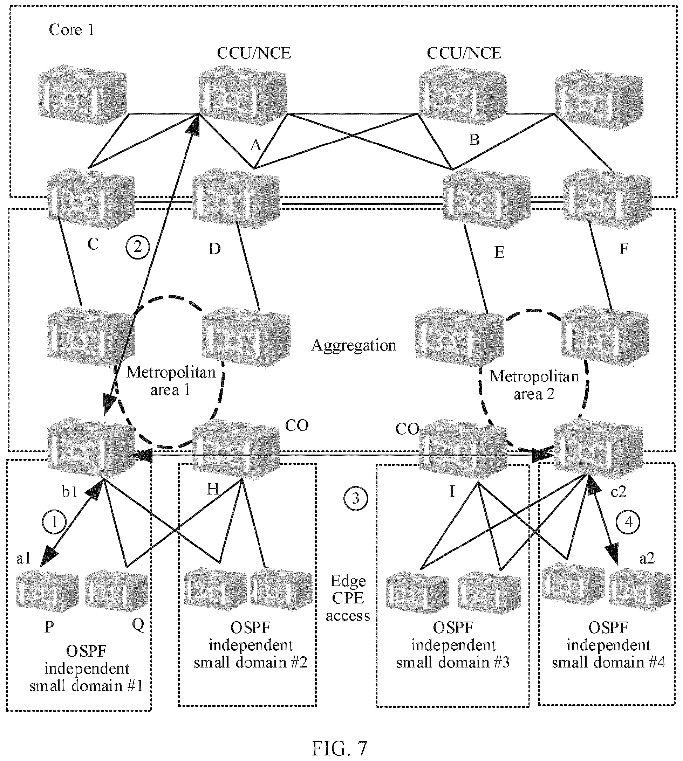

FIG. 7 is a schematic diagram of a network architecture for implementing a large-scale networking routing method according to an embodiment of this application. As shown in FIG. 7, large-scale networking is automatically and/or manually divided into a backbone core network, a metropolitan area aggregation network, and an edge CPE access network, and a unique node label in the entire network is configured.

Specifically, the backbone core network (for example, a core 1) corresponds to an area 0, the metropolitan area aggregation network (for example, a metropolitan area 1 and a metropolitan area 2) corresponds to an area 1, and the edge CPE access network (for example, an OSPF independent small domain #1, an OSPF independent small domain #2, an OSPF independent small domain #3, and an OSPF independent small domain #4) corresponds to an area 2.

The core 1 includes a network element A (for example, a CCU/an NCE) and a network element B (for example, the CCU/NCE), the metropolitan area 1 includes network elements M and N, and the OSPF independent small domain #1 network includes network elements a1, P, Q, and the like.

For example, a border network element (for example, C, D, E, or F) between the backbone core network and the metropolitan area aggregation network may be an area border router ABR, and a border network element (for example, b1, H, I, or c2) between the metropolitan area aggregation network and the edge CPE access network may be an ASBR, that is, a CO node.

In a possible implementation, the backbone core network and the metropolitan area aggregation network above the CO node form an OSPF large AS domain, and an OSPF protocol is used for network-wide flooding, in other words, any route between points is actively discovered.

For example, a routing protocol in each area (that is, the backbone area or the metropolitan area) is released to a network element, a hello packet is sent through a control interface to discover a neighbor and obtain local link state information, and an LSA link state advertisement packet is flooded until all network elements obtain network-wide link state information. After network convergence, a network-wide route is calculated. To be specific, each network element obtains routes of all nodes, that is, a routing table, based on an algorithm. Based on this, the network element may know, by querying the routing table, to which interface a control packet is sent.

In addition, a reactive mechanism is introduced into the edge network. All high-end CPE nodes run the OSPF protocol. After the CPE goes online, a corresponding local CO node actively discovers a route of the CPE and forms an OSPF independent small domain (for example, the OSPF independent small domain #1, the OSPF independent small domain #2, the OSPF independent small domain #3, and the OSPF independent small domain #4).

For example, for the OSPF independent small domain, the CPE (for example, a1) may flood a CPE node attribute to the local CO node (for example, b1) by using an OSPF dynamic routing mechanism, and the CPE is directly connected to the neighboring CO node to form an OSPF subnet. In other words, the CO node (for example, b1) may perceive, in real time, route information of all CPE nodes (for example, a1, P, and Q) connected to the CO node.

In other words, a core uses an active routing protocol in the large-scale networking. Therefore, the CCU/NCE has network-wide route information. An edge uses a reactive routing protocol. The CO can perceive a route of the CPE node connected to the CO in real time. In other words, a CO node in each independent OSPF small domain has all local CPE route information.

Further, after aggregating the routes of all the CPE nodes connected to the local CO node, the local CO node may advertise a local subnet route (for example, route information of the OSPF independent small domain #1) to the CCU/NCE in a point-to-point manner without introducing flooding to another node. In this case, the CCU/NCE has the route information of the CPE nodes and CO nodes in the entire network.

Optionally, the CO node may select a core node as a route forwarding node. For example, an edge aggregation node ABR (for example, C, D, E, or F) of the core network and the metropolitan area aggregation network, and a CCU core node network element (for example, A or B) that is deployed in the backbone network. This is not specifically limited in this application.

Optionally, another local CPE node may also subscribe to the CCU/NCE for routes of the local CO (for example, b1) and all the CPE nodes connected to the local CO.

For example, after discovering that the route information of the CPE node connected to the CO node changes, the CO node may actively advertise a belonging relationship between the CPE node route and an ID of the CO node to the CCU/NCE in the point-to-point manner, without advertising to another node in the large-scale networking. After receiving the advertisement, the CCU/NCE may refresh a local cache, to quickly achieve route convergence.

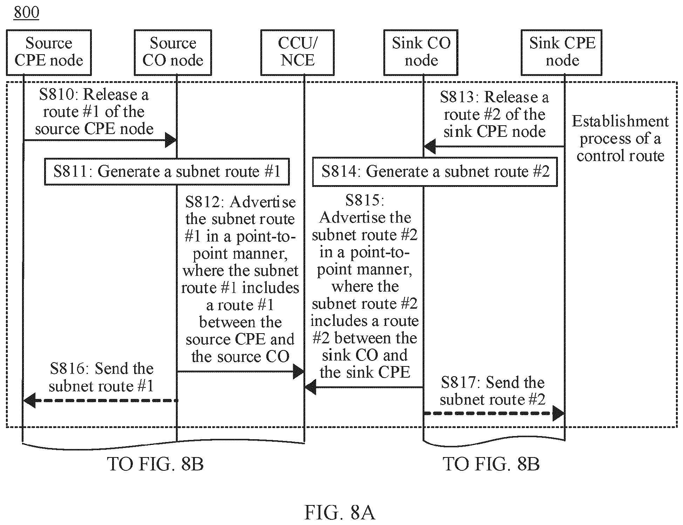

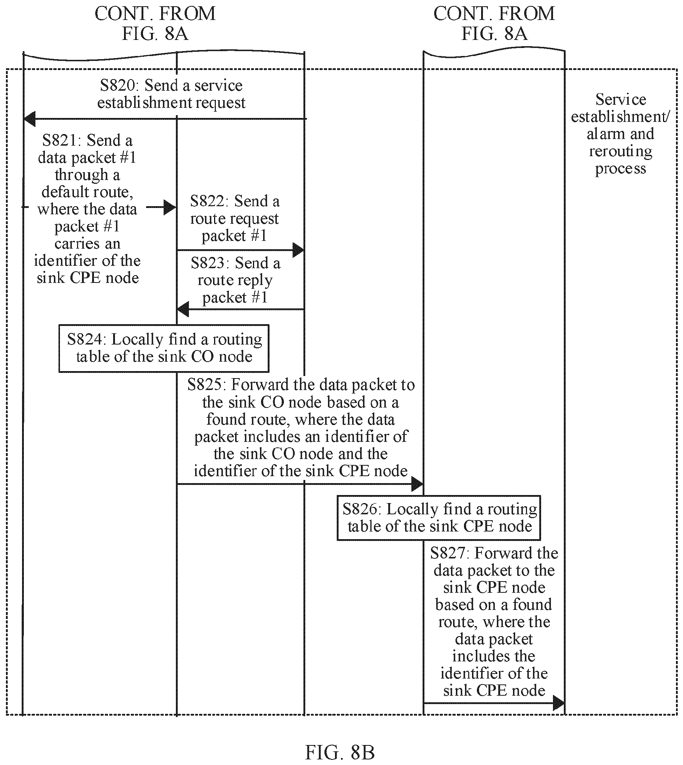

FIG. 8A and FIG. 8B are a schematic flowchart of another large-scale networking routing method according to an embodiment of this application. In this implementation, backbone core OSPF network-wide flooding is performed, a CCU/an NCE have a network-wide route, and edge routes are automatically discovered and queried on demand. As shown in FIG. 8A and FIG. 8B, the routing method 800 includes two aspects: route establishment and service request, and specifically includes the following plurality of steps.

S810: A source CPE node releases a route #1 of the source CPE node.

Correspondingly, a source CO node receives the route #1 from the source CPE node.

For example, a large-scale networking shown in FIG. 8A and FIG. 8B is used as an example. The source CPE node (for example, a1) goes online, and an OSPF dynamic routing mechanism is used to flood a node a1 attribute to the source CO node (for example, b1) through all neighbors.

Similarly, for an OSPF independent small domain #1, P and Q may also flood a node attribute to the node b1 after going online.

It should be noted that, the node b1 is a border network element between a metropolitan area aggregation network (for example, a metropolitan area 1) and an edge CPE access network (for example, the OSPF small domain #1). b1 is set in advance or automatically identified as the border network element. This is not specifically limited in this application.

S811: The source CO node generates a subnet route #1.

The subnet route #1 is intra-domain route information of the OSPF small domain #1. The OSPF small domain #1 may include one or more source CPE nodes or source CO nodes, in other words, the subnet route #1 includes route information between all intra-domain source CPE nodes and source CO nodes. Therefore, the subnet route #1 includes a route between the source CPE node and the source CO node.

For example, after the source CPE node (for example, a1) goes online, the source CO node (for example, b1) actively discovers a route of a1, to generate a route #1 between a1 and b1.

Specifically, other source CPE nodes, for example, P and Q, may further be connected to b1 in the OSPF independent small domain #1. Therefore, after P and Q go online, b1 correspondingly generates a route #11 between P and b1, and generates a route #111 between Q and b1. In this case, the intra-domain route information of the OSPF small area #1 is the subnet route #1.

It should be understood that, because a reactive mechanism is introduced into the edge CPE access network, that is, after the CPE goes online, the CO may actively discover a route of the CPE, an OSPF independent small domain is further formed. The CO node b1 perceives only routes of the locally connected CPE nodes (for example, a1, P, and Q) in real time, in other words, a CO node in each edge OSPF independent small domain has the routes of all the local CPE nodes.

It should be noted that the foregoing is merely an example for description, and a quantity of source CPE nodes connected to the source CO node is not specifically limited in this application.

S812: The source CO node advertises the subnet route #1 to the CCU/NCE in a point-to-point manner.

Correspondingly, the CCU/NCE receives the subnet route #1 from the source CO node in the point-to-point manner.

For example, based on the foregoing step S811, b1 advertises the subnet route #1 to the CCU/NCE in the point-to-point manner.

The subnet route #1 is the route information of the OSPF small domain #1. Specifically, the subnet route #1 includes the route #1, the route #11, and the route #111.

By way of example but not limitation, when the subnet route #1 changes, the node b1 updates the subnet route #1, and sends an updated subnet route #1 to the CCU or the NCE.

It should be understood that the updated subnet route #1 may be all routes of an updated OSPF small domain #1, or may be a part of updated routes of the subnet route #1. This is not specifically limited in this application.

In this implementation, after aggregating intra-domain routes of the OSPF, the source CO node may advertise the subnet route #1 to the CCU/NCE in the point-to-point manner without forwarding the subnet route #1 to other nodes (for example, H, M, and N), so that a network-wide flooding amount can be reduced, a storage requirement can be reduced, and the like.

Optionally, S816: The source CO node sends the subnet route #1 to the source CPE node.

Correspondingly, the source CPE node receives the subnet route #1 from the source CO node.

Based on this implementation, the source CPE node has the route information of the OSPF small domain #1.

Similar to the foregoing steps S810 to S812 and S816, the following several steps are included in route establishment between a sink CPE node and a sink CO node in an OSPF independent small domain #4.

S813: The CPE node releases a route #2 of the sink CPE node.

Correspondingly, the sink CO node receives the route #2 from the sink CPE node.

For example, a large-scale networking shown in FIG. 8A and FIG. 8B is used as an example. The sink CPE node (for example, a2) goes online, and an OSPF dynamic routing mechanism is used to flood the node a2 attribute to the sink CO node (for example, c2) through all neighbors.

It should be noted that, the node c2 is a border network element between a metropolitan area aggregation network (for example, a metropolitan area 2) and an edge CPE access network (for example, the OSPF small domain #4). c2 is set in advance or automatically identified as the border network element. This is not specifically limited in this application.

S814: The sink CO node generates a subnet route #2.

The subnet route #2 is intra-domain route information of the OSPF small domain #4. The OSPF small domain #4 may include one or more sink CPE nodes or sink CO nodes, in other words, the subnet route #2 includes route information between all intra-domain sink CPE nodes and sink CO nodes. Therefore, the subnet route #2 includes a route between the sink CPE node and the sink CO node.

For example, after the sink CPE node (for example, a2) goes online, the sink CO node (for example, c2) actively discovers a route of a2, to generate a route #2 between a2 and c2.

Specifically, another sink CPE node may further be connected to c2 in the OSPF independent small domain #4. After the another sink CPE node goes online, c2 generates a route between the another CPE node and c2. In this case, the intra-domain route information of the OSPF small area #4 is the subnet route #2.

It should be noted that the foregoing is merely an example for description, and a quantity of sink CPE nodes connected to the sink CO node is not specifically limited in this application.

S815: The sink CO node advertises the subnet route #2 to the CCU/NCE in a point-to-point manner.

Correspondingly, the CCU/NCE receives the subnet route #2 from the sink CO node in the point-to-point manner.

For example, c2 advertises the subnet route #2 generated in step S814 to the CCU/NCE in the point-to-point manner.

The subnet route #2 is the route information of the OSPF small domain #4. Specifically, the subnet route #2 includes the route #2.

By way of example but not limitation, when the subnet route #2 changes, c2 updates the subnet route #2, and sends an updated subnet route #2 to the CCU or the NCE.

It should be understood that the updated subnet route #2 may be all routes of an updated OSPF small domain #4, or may be a part of updated routes of the subnet route #2. This is not specifically limited in this application.

In this implementation, after aggregating intra-domain routes of the OSPF, the sink CO node may advertise the subnet route #2 to the CCU/NCE in the point-to-point manner without forwarding the subnet route #2 to other nodes (for example, I), so that a network-wide flooding amount can be reduced, a storage requirement can be reduced, and the like.

Optionally, S817: The sink CO node sends the subnet route #2 to the sink CPE node.

Correspondingly, the sink CPE node receives the subnet route #2 from the sink CO node.

Based on this implementation, the sink CPE node has the route information of the OSPF small domain #4.

It should be noted that the foregoing descriptions are merely provided by using the OSPF independent small domain #1 and the OSPF independent small domain #4 as examples, and does not constitute any limitation on the technical solutions of this application. For example, CO nodes in an OSPF independent small domain #2 and an OSPF independent small domain #3 also advertise local subnet routes to the CCU/NCE in the point-to-point manner, and do not need to perform network-wide flooding. Therefore, the CCU/NCE in the entire large-scale networking have the network-wide route.

Based on the foregoing completion of route establishment of the large-scale networking, the technical solutions of this application are applicable to a scenario of a cross-edge service establishment process, and specifically include the following plurality of steps.

S820: The CCU/NCE sends a service establishment request message to the source CPE node.

Correspondingly, the source CPE node receives the service establishment request message from the CCU/NCE.

The service establishment request message includes an identifier of the sink CPE node, and is used to request to establish a service between the source CPE node and the sink CPE node.

S821: The source CPE node sends a data packet #1 to the source CO node through a default route.

Correspondingly, the source CO node receives the data packet #1 from the source CPE node.

The data packet #1 is used to request the source CPE node to establish the service with the sink CPE node, and the data packet #1 carries identifier information #1 of the sink CPE node.

For example, the NCE requests to establish a cross-edge node service, and delivers a service establishment request to the source CPE node.

Specifically, the source CPE node (for example, a1) in the OSPF independent small domain #1 sends the data packet #1 to the sink CPE node (for example, a2) in the OSPF independent small domain #4, where the data packet #1 carries identifier information of a2. Because there is only a routing table of the OSPF independent small domain #1 on the source CPE node, the source CPE node a1 sends the default route to the source CO node b1.

S822: The source CO node sends a route request packet #1 to the CCU/NCE.

Correspondingly, the CCU/NCE receives the route request packet #1 from the source CO node.

The route request packet #1 is used to request to obtain the sink CO node corresponding to the sink CPE node, that is, a route #2 between the sink CPE node and the sink CO node. "Corresponding" may be understood as that route information of a CPE node is saved through a CO node, and the CPE node belongs to (is connected to) the CO node. The CO node may determine the route information of the CPE node by querying a local routing table.

S823: The CCU/NCE sends a route reply packet #1 to the source CO node.

Correspondingly, the source CO node receives the route reply packet #1 from the CCU/NCE.

The route reply packet #1 includes the route #2 between the sink CPE node and the sink CO node.

For example, b1 queries route information of a2 on demand, to be specific, b1 sends the route request packet #1 to the CCU/NCE. The request packet #1 is used to request to query the route information of a2, that is, the route #2 between a2 and c2.

Correspondingly, the CCU/NCE sends the route reply packet #1 to b1, where the packet carries the route #2.

S824: The source CO node locally finds a routing table of the sink CO node.

S825: The source CO node forwards the data packet #1 to the sink CO node based on a found route.

Correspondingly, the sink CO node receives the data packet #1 from the source CO node.

For example, b1 forwards the data packet #1 to c2 based on a found route #2.

S826: The sink CO node locally finds a routing table of the sink CPE node.

S827: The sink CO node forwards the data packet #1 to the sink CPE node based on a found route.

Correspondingly, the sink CPE node receives the data packet #1 from the sink CO node, to complete service establishment with the source CPE node.

For example, c2 queries the local routing table, that is, the subnet route #2 of the OSPF independent small domain #4, and forwards the data packet #1 to a2, that is, completes a process of establishing a cross-edge service.

Based on this, communication or data transmission may be performed between a1 and a2.

It should be noted that, when a service is established for the first time, the source CO node queries the sink CO corresponding to the sink CPE node from the CCU/NCE, which may cause a delay of about 250 ms on average (5 ms/hop x 25 hops x 2 (round-trip)) in service communication.

Optionally, the source CO node b1 may locally cache the route #2 between the sink CPE node a2 and the sink CO node c2. In a subsequent service operation, b1 does not need to actively query the route #2 from the CCU/NCE again, so that the communication delay can be reduced.

Based on the foregoing completion of route establishment of the large-scale networking, the technical solutions of this application are further applicable to a scenario in which a cross-edge service generates an alarm and triggers service rerouting.

Specifically, when detecting the cross-edge service fault alarm, a core network element requests a service head node (for example, the source CPE a1) for service rerouting information. In the service establishment process, association information between service head nodes of the source CPE node a1 and the source CO node b1 is carried in channel-associated manner. For example, a service fault notification (notify) message is first sent to the service source CO node through routing, and then forwarded by the source CO node b1 to the source CPE node a1, to complete a fast service rerouting request process.

It should be noted that, if the cached association information between the source CO node b1 and the source CPE node a1 changes, and the notify message is unreachable, an association relationship between the source CO node b1 and the source CPE node a1 still needs to be queried from the CCU/NCE again, and then packet forwarding is performed. This causes a partial delay in the service communication.

It should be understood that the foregoing service establishment and rerouting scenarios are merely examples for descriptions, and constitute no limitation on the technical solutions of this application.

In this implementation, the CCU/NCE has route association information of network-wide CPEs and COs. Each edge node maintains only the local routing table, to effectively reduce the storage requirement. In addition, route changes of the edge network do not need to be flooded to the entire network. The CO can update route information of the edge node and forward updated information to a limited quantity of nodes (such as the CCU/NCE) through core network nodes (such as a CO/an ABR). This greatly reduces the network flooding amount and ensures availability of a large-scale networking route.

It is considered that only the CCU/NCE has the network-wide route, and the CO only perceive information about the locally connected CPE nodes in real time. Therefore, on-demand query of a temporary route needs to be triggered during the service communication. In some scenarios, communication delay occurs. In addition, during a service establishment and running process, a large quantity of nodes need to request to query route information from the CCU/NCE for communication, causing high pressure on a CPU of the CCU/NCE. Therefore, in this embodiment of this application, the backbone core OSPF network-wide flooding is performed, and a solution of automatic discovery of the edge route and local release is used.

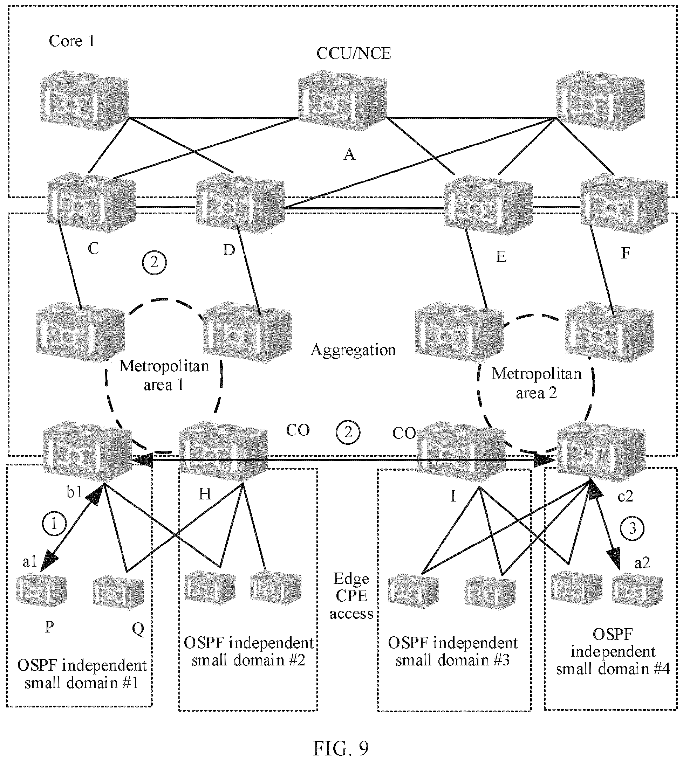

FIG. 9 is a schematic diagram of another network architecture for implementing a large-scale networking routing method according to an embodiment of this application. As shown in FIG. 9, large-scale networking is automatically and/or manually divided into a backbone core network, a metropolitan area aggregation network, and an edge CPE access network.

A difference from the network architecture shown in FIG. 8A and FIG. 8B lies in that, after a local CO node (for example, b1) aggregates routes of all CPE nodes (for example, a1, P, and Q) connected to the local CO node, the CO node may advertise a local subnet route (for example, route information of an OSPF independent small domain #1) to other local CO nodes (for example, H, I, and c2) of the large-scale networking in a point-to-point manner without introducing flooding to another node. In this case, a distributed CO node has route information of network-wide CPE nodes and CO nodes.

It should be noted that, for a part that is not described in detail of the network architecture, refer to the network architecture shown in FIG. 8A and FIG. 8B. For brevity, details are not described herein again.

For example, after discovering that route information of the CPE node connected to the CO node changes, the CO node may actively advertise a belonging relationship between the CPE node route and an ID of the CO node to another CO node on the large-scale networking in the point-to-point manner, without advertising to a node in a backbone core and metropolitan area aggregation layer in the large-scale networking. After receiving the advertisement, the another node may refresh a local cache, to quickly achieve route convergence.

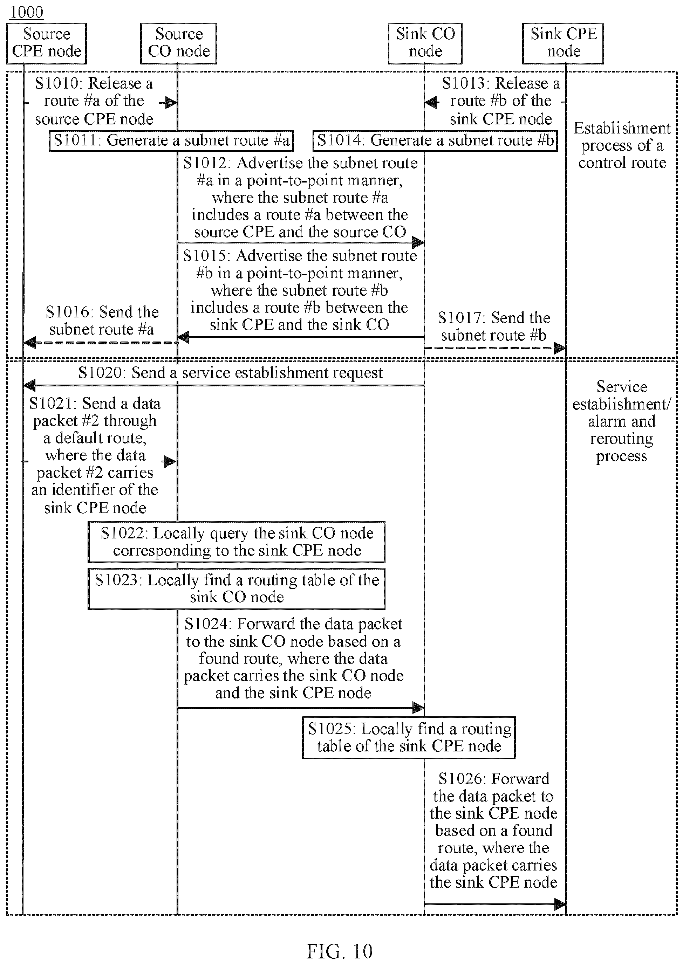

FIG. 10 is a schematic flowchart of still another large-scale networking routing method 1000 according to an embodiment of this application. In this implementation, backbone core OSPF network-wide flooding is performed, and a solution of automatic discovery of an edge route and local release is used As shown in FIG. 10, the routing method 1000 includes two aspects: route establishment and service request, and specifically includes the following plurality of steps.

S1010: A source CPE node releases a route #a of the source CPE node.

Correspondingly, a source CO node receives the route #a from the source CPE node.

S1011: The source CO node generates a subnet route #a.

The subnet route #a is intra-domain route information of an OSPF small domain #1. The OSPF small domain #1 may include one or more source CPE nodes or source CO nodes, in other words, the subnet route #a includes route information between all intra-domain source CPE nodes and source CO nodes. Therefore, the subnet route #a includes a route between the source CPE node and the source CO node.

Specifically, other source CPE nodes, for example, P and Q, may further be connected to b1 in the OSPF independent small domain #1. Therefore, after P and Q go online, b1 correspondingly generates a route #aa between P and b1, and generates a route #aaa between Q and b1. In this case, the intra-domain route information of the OSPF small area #1 is the subnet route #a.

S1012: The source CO node advertises the subnet route #a to a sink CO node in a point-to-point manner.

Correspondingly, the sink CO node receives the subnet route #a from the source CO node in the point-to-point manner.

For example, based on the foregoing step S1011, b1 advertises the subnet routes #a to c2 in the point-to-point manner.

The subnet route #a is the route information of the OSPF small domain #1. Specifically, the subnet route #a includes the route #a, the route #aa, and the route #aaa.

By way of example but not limitation, when the subnet route #a changes, the node b1 updates the subnet route #a, and sends an updated subnet route #a to c2.

It should be understood that the updated subnet route #a may be all routes of an updated OSPF small domain #1, or may be a part of updated routes of the subnet route #a. This is not specifically limited in this application.

In this implementation, after aggregating intra-domain routes of the OSPF, the source CO node may advertise the subnet route #a to the sink CO node in the point-to-point manner without forwarding the subnet route #a to other nodes (for example, H and I), so that a network-wide flooding amount can be reduced, a storage requirement can be reduced, and the like.

Optionally, the source CO node releases the subnet route #a to a CCU/an NCE. This is not specifically limited in this application.

Optionally, S1016: The source CO node sends the subnet route #a to the source CPE node.

Correspondingly, the source CPE node receives the subnet route #a from the source CO node.

Based on this implementation, the source CPE node has the route information of the OSPF small domain #1.

Similar to the foregoing steps S1010 to S1012 and S1016, the following several steps are included in route establishment between a sink CPE node and a sink CO node in an OSPF independent small domain #4.

S1013: The sink CPE node releases a route #b of the sink CPE node.

Correspondingly, the sink CO node receives the route #b from the sink CPE node.

S1014: The sink CO node generates a subnet route #b.

The subnet route #b is intra-domain route information of the OSPF small domain #4. The OSPF small domain #4 may include one or more sink CPE nodes or sink CO nodes, in other words, the subnet route #b includes route information between all intra-domain sink CPE nodes and sink CO nodes. Therefore, the subnet route #b is a route between the sink CPE node and the sink CO node.

S1015: The sink CO node advertises the subnet route #b to the source CO node in a point-to-point manner.

Correspondingly, the source CO node receives the subnet route #b from the sink CO node in the point-to-point manner.

For example, c2 advertises the subnet route #b generated in step S1014 to the source CO node in the point-to-point manner.

The subnet route #b is the route information of the OSPF small domain #4. Specifically, the subnet route #b includes the route #b.

By way of example but not limitation, when the subnet route #b changes, c2 updates the subnet route #b, and sends an updated subnet route #b to b1.

It should be understood that the updated subnet route #b may be all routes of an updated OSPF small domain #4, or may be a part of updated routes of the subnet route #b. This is not specifically limited in this application.

In this implementation, after aggregating intra-domain routes of the OSPF, the sink CO node may advertise the subnet route #b to the source CO node in the point-to-point manner without forwarding the subnet route #b to other nodes (for example, H and I), so that a network-wide flooding amount can be reduced, a storage requirement can be reduced, and the like.

Optionally, the sink CO node advertises the subnet route #b to the CCU/NCE in the point-to-point manner. This is not specifically limited in this application.

Optionally, S1017: The sink CO node sends the subnet route #b to the sink CPE node.

Correspondingly, the sink CPE node receives the subnet route #b from the sink CO node.

Based on this implementation, the sink CPE node has the route information of the OSPF small domain #4.

It should be noted that, for a specific implementation of steps S1010 to S1017, refer to steps S810 to S817 in the method 800. For brevity, details are not described herein again.

Based on the foregoing completion of route establishment of the large-scale networking, the technical solutions of this application are applicable to a scenario of a cross-edge service establishment process. Specifically, the process includes the following plurality of steps.

S1020: The CCU/NCE sends a service establishment request message to the source CPE node.

Correspondingly, the source CPE node receives the service establishment request message from the CCU/NCE.

The service establishment request message includes an identifier of the sink CPE node, and is used to request to establish a service between the source CPE node and the sink CPE node.

S1021: The source CPE node sends a data packet #2 to the source CO node through a default route.

Correspondingly, the source CO node receives the data packet #2 from the source CPE node.

The data packet #2 is used to request the source CPE node to communicate with the sink CPE node, and the data packet #2 carries identifier information #2 of the sink CPE node.

For example, the NCE requests to establish a cross-edge node service, and delivers a service establishment request to the source CPE node.

Specifically, the source CPE node (for example, a1) in the OSPF independent small domain #1 sends the data packet #2 to the sink CPE node (for example, a2) in the OSPF independent small domain #4, where the data packet #2 carries identifier information of a2. Because there is only a routing table of the OSPF independent small domain #1 on the source CPE node, the source CPE node a1 sends the default route to the source CO node b1.

S1022: The source CO node locally queries the sink CO node corresponding to the sink CPE node.

S1023: The source CO node locally finds a routing table of the sink CO node.

It should be noted that, based on the foregoing step S1015, it can be learned that the source CO node has a network-wide route. Therefore, on-demand query of a temporary route does not need to be triggered. The source CO node may obtain, by querying a local routing table, an interface to which the data packet #2 is sent, and does not need to actively query and obtain the subnet route #b from the CCU/NCE. This implementation can reduce a service communication delay.

S1024: The source CO node forwards the data packet #2 to the sink CO node based on a found route.

Correspondingly, the sink CO node receives the data packet #2 from the source CO node.

For example, b1 forwards the data packet #2 to c2 based on the found route #b.

S1025: The sink CO node locally finds a routing table of the sink CPE node.

S1026: The sink CO node forwards the data packet #2 to the sink CPE node based on a found route.

Correspondingly, the sink CPE node receives the data packet #2 from the sink CO node, to complete service establishment with the source CPE node.

For example, c2 queries the local routing table, that is, the subnet route #b of the OSPF independent small domain #4, and forwards the data packet #2 to a2, that is, completes a process of establishing a cross-edge service.

Based on the foregoing completion of route establishment of the large-scale networking, the technical solutions of this application are further applicable to a scenario in which a cross-edge service generates an alarm and triggers service rerouting.

Specifically, when detecting the cross-edge service fault alarm, a core network element requests a service head node (for example, the source CPE a1) for service rerouting information. In the service establishment process, association information between service head nodes of the source CPE node a1 and the source CO node b1 is carried in channel-associated manner. For example, a service fault notification (notify) message is first sent to the service source CO node through routing, and then forwarded by the source CO node b1 to the source CPE node a1, to complete a fast service rerouting request process.

It should be noted that, if the cached association information between the source CO node b1 and the source CPE node a1 changes, the source CO node may quickly and locally query association information between an updated source CPE node a1 and an updated source CO node b1, and forward a packet, to avoid a partial delay in the service communication.

It should be understood that the foregoing service establishment and rerouting scenarios are merely examples for descriptions, and constitute no limitation on the technical solutions of this application.

In this implementation, a distributed CO node has route association information of network-wide CPEs and COs, the CO node does not need to actively query and obtain information from the CCU/NCE, and no extra related delay exists in service communication. Each edge node maintains only the local routing table, to effectively reduce the storage requirement. In addition, route changes of the edge network do not need to be flooded to the entire network. The CO can update route information of the edge node and release updated information to other CO nodes. This greatly reduces the network flooding amount, ensures availability of a large-scale networking route, and implements fast real-time communication of a service control process, to reduce pressure on a CPU of the CCU/NCE.

In conclusion, the technical solutions of this application provide a device routing method in which a core uses active routing and an edge uses reactive routing in the large-scale networking. The edge node maintains only the local routing table, to effectively reduce the storage requirement. In addition, route changes of the edge network do not need to be perceived by all other nodes in the network. This greatly reduces the network flooding amount, reduces routing table information and network control overheads of the entire network, and ensures the availability of the large-scale networking route. The CO releases local route information to other local CO nodes on the large-scale network in the point-to-point manner. The distributed CO node has the association relationship between the network-wide CPEs and COs. When a service of the cross-edge network is provisioned or faults occur, the route information of the sink CPE route can be directly obtained without triggering the on-demand query of the temporary route. In this way, service packet forwarding and control packet sending are decoupled, to ensure fast communication of the service control process and reduce the pressure on the CPU of the CCU/NCE. The technical solutions of this application can support route reachability between any two nodes in the large-scale network, and are applicable to a newly built network, an existing network, and the like.

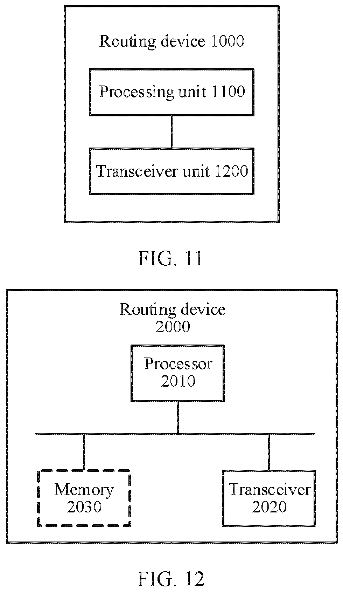

The foregoing describes in detail embodiments of the large-scale networking routing method in this application with reference to FIG. 1 to FIG. 10. The following describes in detail an embodiment of a routing device in this application with reference to FIG. 11 and FIG. 12. It should be understood that the descriptions of the apparatus embodiments correspond to the descriptions of the method embodiments. Therefore, for parts not described in detail, refer to the foregoing method embodiments.

FIG. 11 is a schematic diagram of a routing device according to an embodiment of this application. As shown in FIG. 11, the routing device 1000 may include a processing unit 1100 and a transceiver unit 1200.

Optionally, the routing device 1000 may correspond to the source CPE node in the foregoing method embodiments, or a component (such as a circuit, a chip, or a chip system) configured in the source CPE node.

Optionally, the routing device 1000 may correspond to the source CO node in the foregoing method embodiments, or a component (such as a circuit, a chip, or a chip system) configured in the source CO node.

Optionally, the routing device 1000 may correspond to the sink CO node in the foregoing method embodiments, or a component (such as a circuit, a chip, or a chip system) configured in the sink CO node.

Optionally, the routing device 1000 may be corresponding to the sink CPE node in the foregoing method embodiments, or a component (such as a circuit, a chip, or a chip system) configured in the sink CPE node.

It should be understood that the routing device 1000 may correspond to the routing device in the methods according to embodiments of this application, and the routing device 1000 may include units configured to perform the methods performed by the routing device in the methods in embodiments of this application. In addition, the units in the routing device 1000 and the foregoing other operations and/or functions are separately used to implement corresponding procedures of the methods in embodiments of this application.

It should be further understood that, when the routing device 1000 is the routing device, the transceiver unit 1200 in the routing device 1000 may be implemented by using a transceiver, for example, may correspond to a transceiver 2020 in a routing device 2000 shown in FIG. 12. The processing unit 1100 in the routing device 1000 may be implemented by using at least one processor, for example, may correspond to a processor 2010 in the routing device 2000 shown in FIG. 12.

It should be further understood that when the routing device 1000 is a chip or a chip system configured in the routing device, the transceiver unit 1200 in the routing device 1000 may be implemented by an input/output interface, a circuit, or the like, and the processing unit 1100 in the routing device 1000 may be implemented by a processor, a microprocessor, an integrated circuit, or the like integrated in the chip or the chip system.

FIG. 12 is a schematic diagram of another routing device according to an embodiment of this application. As shown in FIG. 12, the routing device 2000 includes a processor 2010, a transceiver 2020, and a memory 2030. The processor 2010, the transceiver 2020, and the memory 2030 communicate with each other via an internal connection path. The memory 2030 is configured to store instructions. The processor 2010 is configured to execute the instructions stored in the memory 2030, to control the transceiver 2020 to send and/or receive a signal.

It should be understood that the routing device 2000 may correspond to the routing device in the foregoing method embodiments, and may be configured to perform the steps and/or the procedures performed by the routing device in the foregoing method embodiments.

Optionally, the memory 2030 may include a read-only memory and a random access memory, and provide instructions and data to the processor. A part of the memory may further include a non-volatile random access memory. The memory 2030 may be an independent device, or may be integrated into the processor 2010. The processor 2010 may be configured to execute the instructions stored in the memory 2030, and when the processor 2010 executes the instructions stored in the memory, the processor 2010 is configured to perform the steps and/or the procedures corresponding to the routing device in the foregoing method embodiments.

Optionally, the routing device 2000 is the source CPE node in the foregoing embodiments.

Optionally, the routing device 2000 is the source CO node in the foregoing embodiments.

Optionally, the routing device 2000 is the sink CO node in the foregoing embodiments.

Optionally, the routing device 2000 is the sink CPE node in the foregoing embodiments.

The transceiver 2020 may include a transmitter machine and a receiver machine. The processor 2010, the memory 2030, and the transceiver 2020 may be components integrated on different chips. For example, the processor 2010 and the memory 2030 may be integrated into a baseband chip, and the transceiver 2020 may be integrated into a radio frequency chip. Alternatively, the processor 2010, the memory 2030, and the transceiver 2020 may be components integrated on a same chip. This is not limited in this application.

Optionally, the routing device 2000 is a component configured in the routing device, such as a circuit, a chip, or a chip system.

Alternatively, the transceiver 2020 may be a communication interface, such as an input/output interface or a circuit. The transceiver 2020, the processor 2010, and the memory 2030 may be integrated into a same chip, for example, integrated into a baseband chip.

It should be understood that specific examples in embodiments of this application are merely intended to help a person skilled in the art better understand the technical solutions of this application. The foregoing specific implementations may be considered as optimal implementations of this application, but are not intended to limit the scope of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part of or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A large-scale networking routing method, wherein large-scale networking comprises a backbone core network wherein a network-wide routing table information is maintained in the backbone area, a metropolitan area aggregation network wherein only routing table information in the area is maintained in the metropolitan area, and an edge customer premises equipment, CPE, access network, wherein the backbone core network comprises a central control unit, CCU, or a network cloud engine, NCE, the metropolitan area aggregation network comprises a first metropolitan area aggregation network and a second metropolitan area aggregation network, and the edge CPE access network comprises a first edge CPE access network and a second edge CPE access network, wherein the first edge CPE access network comprises at least one source CPE node, a border network element between the first metropolitan area aggregation network and the first edge CPE access network comprises a source Center Office, CO, node, the second edge CPE access network comprises at least one sink CPE node, and a border network element between the second metropolitan area aggregation network and the second edge CPE access network comprises a sink CO node, and the method comprises:
receiving a route by the source CO node from the source CPE node;
generating (S611), by the source CO node, a first subnet route, wherein the first subnet route is a route of the first edge CPE access network, the first subnet route comprises route information between one or more source CPE nodes of the at least one source CPE nodes and the source CO node wherein the route information is generated by the source CO node after the one or more source CPE nodes go online in sequence;
delivering, by the source CO node, the first subnet route to the one or more source CPE nodes; and
advertising, by the source CO node, the first subnet route in a point-to-point manner;
wherein the advertising, by the source CO node, the first subnet route in a point-to-point manner comprises:
advertising (S612), by the source CO node, the first subnet route to the central control unit, CCU, or the network cloud engine, NCE, in the point-to-point manner; or
advertising (S613), by the source CO node, the first subnet route to the sink CO node in the point-to-point manner.

2. The method according to claim 1, wherein the method further comprises:
when the first subnet route changes, updating, by the source CO node, the first subnet route; and
advertising, by the source CO node, an updated first subnet route or an updated route of the first subnet route to the CCU or the NCE in the point-to-point manner.

3. The method according to claim 1, wherein the method further comprises:
when the first subnet route changes, updating, by the source CO node, the first subnet route; and
advertising, by the source CO node, an updated first subnet route or an updated route of the first subnet route to the sink CO node in the point-to-point manner.

4. The method according to any one of claims 1 to 3, wherein the source CO node is set in advance or automatically identified as the border network element between the first metropolitan area aggregation network and the first edge CPE access network.

5. The method according to any one of claims 1 to 4, wherein the method further comprises:
receiving, by the source CO node, a data packet from the source CPE node, wherein the data packet carries an identifier of the sink CPE node;
obtaining, by the source CO node, the sink CO node corresponding to the sink CPE node; and
locally finding, by the source CO node, a routing table of the sink CO node, and forwarding the data packet to the sink CO node based on a found route, wherein the data packet carries an identifier of the sink CO node and the identifier of the sink CPE node.

6. The method according to claim 5, wherein the obtaining, by the source CO node, the sink CO node corresponding to the sink CPE node comprises:
sending, by the source CO node, a route request packet to the CCU or the NCE, wherein the route request packet is used to request to obtain the sink CO node corresponding to the sink CPE node, and the route request packet comprises the identifier of the sink CPE node; and
receiving, by the source CO node, a route reply packet from the CCU or the NCE, wherein the route reply packet comprises the identifier of the sink CO node corresponding to the sink CPE node.

7. The method according to claim 5 or 6, wherein the obtaining, by the source CO node, the sink CO node corresponding to the sink CPE node comprises:
receiving, by the source CO node, a second subnet route from the sink CO node in the point-to-point manner, wherein the second subnet route is a route of the second edge CPE access network, the second subnet route comprises route information between the sink CO node and one or more sink CPE nodes of the at least one sink CPE nodes wherein the route information is generated by the sink CO node after the one or more sink CPE nodes go online in sequence, and the sink CO node is a border network element between the second metropolitan area aggregation network and the second edge CPE access network;; and
locally querying, by the source CO node, the routing table to obtain the sink CO node corresponding to the sink CPE node.

8. A large-scale networking routing method, wherein large-scale networking comprises a backbone core network wherein a network-wide routing table information is maintained in the backbone area, a metropolitan area aggregation network wherein only routing table information in the area is maintained in the metropolitan area, and an edge customer premises equipment, CPE, access network, wherein the backbone core network comprises a central control unit, CCU, or a network cloud engine, NCE, the metropolitan area aggregation network comprises a first metropolitan area aggregation network and a second metropolitan area aggregation network, and the edge CPE access network comprises a first edge CPE access network and a second edge CPE access network, wherein the first edge CPE access network comprises at least one source CPE node, a border network element between the first metropolitan area aggregation network and the first edge CPE access network comprises a source Center Office, CO, node, the second edge CPE access network comprises at least one sink CPE node, and a border network element between the second metropolitan area aggregation network and the second edge CPE access network comprises a sink CO node, and the method comprises:
receiving a route by the sink CO node from the sink CPE node;
generating (S621), by the sink CO node, a second subnet route, wherein the second subnet route is a route of the second edge CPE access network, the second subnet route comprises route information between the sink CO node and one or more sink CPE nodes of the at least one sink CPE nodes wherein the route information is generated by the sink CO node after the one or more sink CPE nodes go online in sequence,
advertising, by the sink CO node, the second subnet route to the one or more sink CPE nodes; and
advertising, by the sink CO node, the second subnet route in a point-to-point manner;
wherein the advertising, by the sink CO node, the second subnet route in a point-to-point manner comprises:
advertising (S622), by the sink CO node, the second subnet route to the central control unit, CCU, or the network cloud engine, NCE, in the point-to-point manner; or
advertising (S623), by the sink CO node, the second subnet route to the source CO node in the point-to-point manner.

9. The method according to claim 8, wherein the method further comprises:
when the second subnet route changes, updating, by the sink CO node, the second subnet route; and
advertising, by the sink CO node, an updated second subnet route or an updated route of the second subnet route to the CCU or the NCE in a point-to-point manner.

10. An optical network system, comprising: a backbone core network wherein a network-wide routing table information is maintained in the backbone area, a metro aggregation network whereon only routing table information in the area is maintained in the metropolitan area , and an edge customer premises equipment, CPE, access network, the backbone core network comprises a central control unit, CCU, or a network cloud engine, NCE, the metropolitan area aggregation network comprises a first metropolitan area aggregation network and a second metropolitan area aggregation network, and the edge CPE access network comprises a first edge CPE access network and a second edge CPE access network, wherein the first edge CPE access network comprises at least one source CPE node, a border network element between the first metropolitan area aggregation network and the first edge CPE access network comprises a source Center Office, CO, node, the second edge CPE access network comprises at least one sink CPE node, and a border network element between the second metropolitan area aggregation network and the second edge CPE access network comprises a sink CO node; and wherein
the source CPE node is configured for releasing a route of the source CPE node such that a source CO node receives the route from the source CPE node and to generate a first subnet route, wherein the first subnet route is a route of the edge CPE access network, the first subnet route comprises route information between one or more source CPE nodes of the at least one source CPE nodes and the source CO node wherein the route information is generated by the source CO node after the one or more source CPE nodes go online in sequence, wherein the source CO node is a border network element between the metropolitan area aggregation network and the edge CPE access network;
the source CPE node is configured for sending a data packet to the source CO node through a default route, wherein the data packet carries an identifier of the sink CPE node;
the sink CPE node is configured for releasing a route of the sink CPE node such that a sink CO node receives the route from the sink CPE node and to generate a second subnet route, wherein the second subnet route is a route of the second edge CPE access network, the second subnet route comprises route information between the sink CO node and one or more sink CPE nodes of the at least one sink CPE nodes wherein the route information is generated by the sink CO node after the one or more sink CPE nodes go online in sequence,
the source CO node is configured for performing the steps of the method according to claim 1; and
the sink CO node is configured for performing the steps of the method according to claim 8.

## Patentansprüche

1. Routingverfahren für großräumiges Netzwerk, wobei das großräumige Netzwerk ein Backbone-Kernnetzwerk, wobei in der Backbone-Region eine netzwerkweite Routingtabelleninformation gepflegt wird, ein Aggregationsnetzwerk einer Metropolregion, wobei in der Metropolregion nur Routingtabelleninformationen in der Region gepflegt werden, und ein Zugangsnetzwerk mit Edge-Teilnehmernetzgeräten (Edge-CPE) umfasst, wobei das Backbone-Kernnetzwerk eine zentrale Steuereinheit (CCU) oder eine Netzwerk-Cloud-Engine (NCE) umfasst, das Aggregationsnetzwerk einer Metropolregion ein erstes Aggregationsnetzwerk einer Metropolregion und ein zweites Aggregationsnetzwerk einer Metropolregion umfasst und das Edge-CPE-Zugangsnetzwerk ein erstes Edge-CPE-Zugangsnetzwerk und ein zweites Edge-CPE-Zugangsnetzwerk umfasst, wobei das erste Edge-CPE-Zugangsnetzwerk mindestens einen Quell-CPE-Knoten umfasst, ein Grenznetzwerkelement zwischen dem ersten Aggregationsnetzwerk einer Metropolregion und dem ersten Edge-CPE-Zugangsnetzwerk einen Quell-Center-Office(CO)-Knoten umfasst, das zweite Edge-CPE-Zugangsnetzwerk mindestens einen Senken-CPE-Knoten umfasst und ein Grenznetzwerkelement zwischen dem zweiten Aggregationsnetzwerk einer Metropolregion und dem zweiten Edge-CPE-Zugangsnetzwerk einen Senken-CO-Knoten umfasst, und das Verfahren Folgendes umfasst:
Empfangen einer Route von dem Quell-CPE-Knoten durch den Quell-CO-Knoten;
Generieren (S611) einer ersten Teilnetzwerkroute durch den Quell-CO-Knoten, wobei die erste Teilnetzwerkroute eine Route des ersten Edge-CPE-Zugangsnetzwerks ist, die erste Teilnetzwerkroute Routeninformationen zwischen einem oder mehreren Quell-CPE-Knoten von dem mindestens einem Quell-CPE-Knoten und dem Quell-CO-Knoten umfasst, wobei die Routeninformationen durch den Quell-CO-Knoten generiert werden, nachdem der eine oder die mehreren Quell-CPE-Knoten nacheinander online gehen;
Liefern der ersten Teilnetzwerkroute an den einen oder die mehreren Quell-CPE-Knoten durch den Quell-CO-Knoten; und
Bekanntgeben der ersten Teilnetzwerkroute von Punkt zu Punkt durch den Quell-CO-Knoten;
wobei das Bekanntgeben der ersten Teilnetzwerkroute von Punkt zu Punkt durch den Quell-CO-Knoten Folgendes umfasst:
Bekanntgeben (S612) der ersten Teilnetzwerkroute von Punkt zu Punkt gegenüber der zentralen Steuereinheit (CCU) oder der Netzwerk-Cloud-Engine (NCE) durch den Quell-CO-Knoten; oder
Bekanntgeben (S613) der ersten Teilnetzwerkroute von Punkt zu Punkt gegenüber dem Senken-CO-Knoten durch den Quell-CO-Knoten.

2. Verfahren nach Anspruch 1, wobei das Verfahren ferner Folgendes umfasst:
wenn sich die erste Teilnetzwerkroute ändert, Aktualisieren der ersten Teilnetzwerkroute durch den Quell-CO-Knoten; und
Bekanntgeben einer aktualisierten ersten Teilnetzwerkroute oder einer aktualisierten Route der ersten Teilnetzwerkroute von Punkt zu Punkt gegenüber der CCU oder der NCE durch den Quell-CO-Knoten.

3. Verfahren nach Anspruch 1, wobei das Verfahren ferner Folgendes umfasst:
wenn sich die erste Teilnetzwerkroute ändert, Aktualisieren der ersten Teilnetzwerkroute durch den Quell-CO-Knoten; und
Bekanntgeben einer aktualisierten ersten Teilnetzwerkroute oder einer aktualisierten Route der ersten Teilnetzwerkroute von Punkt zu Punkt gegenüber dem Senken-CO-Knoten durch den Quell-CO-Knoten.

4. Verfahren nach einem der Ansprüche 1 bis 3, wobei der Quell-CO-Knoten im Voraus als das Grenznetzwerkelement zwischen dem ersten Aggregationsnetzwerk einer Metropolregion und dem ersten Edge-CPE-Zugangsnetzwerk festgelegt oder automatisch als solches identifiziert wird.

5. Verfahren nach einem der Ansprüche 1 bis 4, wobei das Verfahren ferner Folgendes umfasst:
Empfangen eines Datenpakets von dem Quell-CPE-Knoten durch den Quell-CO-Knoten, wobei das Datenpaket eine Kennung des Senken-CPE-Knotens enthält;
Erhalten des mit dem Senken-CPE-Knoten korrespondierenden Senken-CO-Knotens durch den Quell-CO-Knoten; und
lokales Finden einer Routingtabelle des Senken-CO-Knotens durch den Quell-CO-Knoten und Weiterleiten des Datenpakets an den Senken-CO-Knoten basierend auf einer gefundenen Route, wobei das Datenpaket eine Kennung des Senken-CO-Knotens und die Kennung des Senken-CPE-Knotens enthält.

6. Verfahren nach Anspruch 5, wobei das Erhalten des mit dem Senken-CPE-Knoten korrespondierenden Senken-CO-Knotens durch den Quell-CO-Knoten Folgendes umfasst:
Senden eines Routenanforderungspakets an die CCU oder die NCE durch den Quell-CO-Knoten, wobei das Routenanforderungspaket dazu verwendet wird, das Erhalten des mit dem Senken-CPE-Knoten korrespondierenden Senken-CO-Knotens anzufordern und das Routenanforderungspaket die Kennung des Senken-CPE-Knotens umfasst; und
Empfangen eines Routenantwortpakets von der CCU oder der NCE durch den Quell-CO-Knoten, wobei das Routenantwortpaket die Kennung des mit dem Senken-CPE-Knoten korrespondierenden Senken-CO-Knotens umfasst.

7. Verfahren nach Anspruch 5 oder 6, wobei das Erhalten des mit dem Senken-CPE-Knoten korrespondierenden Senken-CO-Knotens durch den Quell-CO-Knoten Folgendes umfasst:
Empfangen einer zweiten Teilnetzwerkroute von Punkt zu Punkt von dem Senken-CO-Knoten durch den Quell-CO-Knoten, wobei die zweite Teilnetzwerkroute eine Route des zweiten Edge-CPE-Zugangsnetzwerks ist, die zweite Teilnetzwerkroute Routeninformationen zwischen dem Senken-CO-Knoten und einem oder mehreren Senken-CPE-Knoten von dem mindestens einen Senken-CPE-Knoten umfasst, wobei die Routeninformationen durch den Senken-CO-Knoten generiert werden, nachdem der eine oder die mehreren Senken-CPE-Knoten nacheinander online gehen, und der Senken-CO-Knoten ein Grenznetzwerkelement zwischen dem zweiten Aggregationsnetzwerk einer Metropolregion und dem zweiten Edge-CPE-Zugangsnetzwerk ist; und
lokales Abfragen der Routingtabelle durch den Quell-CO-Knoten, um den mit dem Senken-CPE-Knoten korrespondierenden Senken-CO-Knoten zu erhalten.

8. Routingverfahren für großräumiges Netzwerk, wobei das großräumige Netzwerk ein Backbone-Kernnetzwerk, wobei in der Backbone-Region eine netzwerkweite Routingtabelleninformation gepflegt wird, ein Aggregationsnetzwerk einer Metropolregion, wobei in der Metropolregion nur Routingtabelleninformationen in der Region gepflegt werden, und ein Zugangsnetzwerk mit Edge-Teilnehmernetzgeräten (Edge-CPE) umfasst, wobei das Backbone-Kernnetzwerk eine zentrale Steuereinheit (CCU) oder eine Netzwerk-Cloud-Engine (NCE) umfasst, das Aggregationsnetzwerk einer Metropolregion ein erstes Aggregationsnetzwerk einer Metropolregion und ein zweites Aggregationsnetzwerk einer Metropolregion umfasst und das Edge-CPE-Zugangsnetzwerk ein erstes Edge-CPE-Zugangsnetzwerk und ein zweites Edge-CPE-Zugangsnetzwerk umfasst, wobei das erste Edge-CPE-Zugangsnetzwerk mindestens einen Quell-CPE-Knoten umfasst, ein Grenznetzwerkelement zwischen dem ersten Aggregationsnetzwerk einer Metropolregion und dem ersten Edge-CPE-Zugangsnetzwerk einen Quell-Center-Office(CO)-Knoten umfasst, das zweite Edge-CPE-Zugangsnetzwerk mindestens einen Senken-CPE-Knoten umfasst und ein Grenznetzwerkelement zwischen dem zweiten Aggregationsnetzwerk einer Metropolregion und dem zweiten Edge-CPE-Zugangsnetzwerk einen Senken-CO-Knoten umfasst, und das Verfahren Folgendes umfasst:
Empfangen einer Route von dem Senken-CPE-Knoten durch den Senken-CO-Knoten;
Generieren (S621) einer zweiten Teilnetzwerkroute durch den Senken-CO-Knoten, wobei die zweite Teilnetzwerkroute eine Route des zweiten Edge-CPE-Zugangsnetzwerks ist, die zweite Teilnetzwerkroute Routeninformationen zwischen dem Senken-CO-Knoten und einem oder mehreren Senken-CPE-Knoten von dem mindestens einen Senken-CPE-Knoten umfasst, wobei die Routeninformationen durch den Senken-CO-Knoten generiert werden, nachdem der eine oder die mehreren Senken-CPE-Knoten nacheinander online gehen,
Bekanntmachen der zweiten Teilnetzwerkroute gegenüber dem einen oder den mehreren Senken-CPE-Knoten durch den Senken-CO-Knoten; und
Bekanntgeben der zweiten Teilnetzwerkroute von Punkt zu Punkt durch den Senken-CO-Knoten;
wobei das Bekanntgeben der zweiten Teilnetzwerkroute von Punkt zu Punkt durch den Senken-CO-Knoten Folgendes umfasst:
Bekanntgeben (S622) der zweiten Teilnetzwerkroute von Punkt zu Punkt gegenüber der zentralen Steuereinheit (CCU) oder der Netzwerk-Cloud-Engine (NCE) durch den Senken-CO-Knoten; oder
Bekanntgeben (S623) der zweiten Teilnetzwerkroute von Punkt zu Punkt gegenüber dem Quell-CO-Knoten durch den Senken-CO-Knoten.

9. Verfahren nach Anspruch 8, wobei das Verfahren ferner Folgendes umfasst:
wenn sich die zweite Teilnetzwerkroute ändert, Aktualisieren der zweiten Teilnetzwerkroute durch den Senken-CO-Knoten; und
Bekanntgeben einer aktualisierten zweiten Teilnetzwerkroute oder einer aktualisierten Route der zweiten Teilnetzwerkroute von Punkt zu Punkt gegenüber der CCU oder der NCE durch den Senken-CO-Knoten.

10. Optisches Netzwerksystem, das Folgendes umfasst: ein Backbone-Kernnetzwerk, wobei in der Backbone-Region eine netzwerkweite Routingtabelleninformation gepflegt wird, ein Metro-Aggregationsnetzwerk, wobei in der Metropolregion nur Routingtabelleninformationen in der Region gepflegt werden, und ein Zugangsnetzwerk mit Edge-Teilnehmernetzgeräten (Edge-CPE), wobei das Backbone-Kernnetzwerk eine zentrale Steuereinheit (CCU) oder eine Netzwerk-Cloud-Engine (NCE) umfasst, das Aggregationsnetzwerk einer Metropolregion ein erstes Aggregationsnetzwerk einer Metropolregion und ein zweites Aggregationsnetzwerk einer Metropolregion umfasst und das Edge-CPE-Zugangsnetzwerk ein erstes Edge-CPE-Zugangsnetzwerk und ein zweites Edge-CPE-Zugangsnetzwerk umfasst, wobei das erste Edge-CPE-Zugangsnetzwerk mindestens einen Quell-CPE-Knoten umfasst, ein Grenznetzwerkelement zwischen dem ersten Aggregationsnetzwerk einer Metropolregion und dem ersten Edge-CPE-Zugangsnetzwerk einen Quell-Center-Office(CO)-Knoten umfasst, das zweite Edge-CPE-Zugangsnetzwerk mindestens einen Senken-CPE-Knoten umfasst und ein Grenznetzwerkelement zwischen dem zweiten Aggregationsnetzwerk einer Metropolregion und dem zweiten Edge-CPE-Zugangsnetzwerk einen Senken-CO-Knoten umfasst; und
wobei der Quell-CPE-Knoten zum Freigeben einer Route des Quell-CPE-Knotens, sodass ein Quell-CO-Knoten die Route von dem Quell-CPE-Knoten empfängt, und zum Generieren einer ersten Teilnetzwerkroute konfiguriert ist, wobei die erste Teilnetzwerkroute eine Route des Edge-CPE-Zugangsnetzwerks ist, die erste Teilnetzwerkroute Routeninformationen zwischen einem oder mehreren Quell-CPE-Knoten von dem mindestens einen Quell-CPE-Knotens und dem Quell-CO-Knoten umfasst, wobei die Routeninformationen durch den Quell-CO-Knoten generiert werden, nachdem der eine oder die mehreren Quell-CPE-Knoten nacheinander online gehen, wobei der Quell-CO-Knoten ein Grenznetzwerkelement zwischen dem Aggregationsnetzwerk einer Metropolregion und dem Edge-CPE-Zugangsnetzwerk ist; der Quell-CPE-Knoten zum Senden eines Datenpakets über eine Standardroute an den Quell-CO-Knoten konfiguriert ist, wobei das Datenpaket eine Kennung des Senken-CPE-Knotens enthält;
der Senken-CPE-Knoten zum Freigeben einer Route des Senken-CPE-Knotens, sodass ein Senken-CO-Knoten die Route von dem Senken-CPE-Knoten empfängt, und zum Generieren einer zweiten Teilnetzwerkroute konfiguriert ist, wobei die zweite Teilnetzwerkroute eine Route des zweiten Edge-CPE-Zugangsnetzwerks ist, die zweite Teilnetzwerkroute Routeninformationen zwischen dem Senken-CO-Knoten und einem oder mehreren Senken-CPE-Knoten von dem mindestens einen Senken-CPE-Knoten umfasst, wobei die Routeninformationen durch den Senken-CO-Knoten generiert werden, nachdem der eine oder die mehreren Senken-CPE-Knoten nacheinander online gehen, der Quell-CO-Knoten dazu konfiguriert ist, die Schritte des Verfahrens nach Anspruch 1 durchzuführen; und
der Senken-CO-Knoten dazu konfiguriert ist, die Schritte des Verfahrens nach Anspruch 8 durchzuführen.

## Revendications

1. Procédé de routage de réseau à grande échelle, dans lequel un réseau à grande échelle comprend un réseau de cœur dorsal dans lequel les informations d'une table de routage à l'échelle du réseau sont conservées dans la zone dorsale, un réseau d'agrégation de zone métropolitaine dans lequel seules des informations de table de routage dans la zone sont conservées dans la zone métropolitaine, et un réseau d'accès à un équipement des locaux d'abonné, CPE, de périphérie, dans lequel le réseau de cœur dorsal comprend une unité de commande centrale, CCU, ou un moteur de nuage de réseau, NCE, le réseau d'agrégation de zone métropolitaine comprend un premier réseau d'agrégation de zone métropolitaine et un second réseau d'agrégation de zone métropolitaine, et le réseau d'accès CPE de périphérie comprend un premier réseau d'accès CPE de périphérie et un second réseau d'accès CPE de périphérie, dans lequel le premier réseau d'accès CPE de périphérie comprend au moins un nœud CPE source, un élément de réseau limite entre le premier réseau d'agrégation de zone métropolitaine et le premier réseau d'accès CPE de périphérie comprend un nœud de Center Office, CO, source, le second réseau d'accès CPE de périphérie comprend au moins un nœud CPE récepteur, et un élément de réseau limite entre le second réseau d'agrégation de zone métropolitaine et le second réseau d'accès CPE de périphérie comprend un nœud CO récepteur, et le procédé comprend :
la réception d'une route par le nœud CO source en provenance du nœud CPE source ;
la génération (S611), par le nœud CO source, d'une première route de sous-réseau, dans lequel la première route de sous-réseau est une route du premier réseau d'accès CPE de périphérie, la première route de sous-réseau comprend des informations de route entre un ou plusieurs nœuds CPE sources de l'au moins un parmi des nœuds CPE sources et le nœud CO source, dans lequel les informations de route sont générées par le nœud CO source après que le ou les nœuds CPE sources sont mis en ligne en séquence ;
la distribution, par le nœud CO source, de la première route de sous-réseau au ou aux nœuds CPE sources ; et
l'annonce, par le nœud CO source, de la première route de sous-réseau selon un mode point à point ;
dans lequel l'annonce, par le nœud CO source, de la première route de sous-réseau selon un mode point à point comprend :
l'annonce (S612), par le nœud CO source, de la première route de sous-réseau à l'unité de commande centrale, CCU, ou au moteur de nuage de réseau, NCE, selon le mode point à point ; ou
l'annonce (S613), par le nœud CO source, de la première route de sous-réseau au nœud CO récepteur selon le mode point à point.

2. Procédé selon la revendication 1, dans lequel le procédé comprend en outre :
lorsque la première route de sous-réseau change, la mise à jour, par le nœud CO source, de la première route de sous-réseau ; et
l'annonce, par le nœud CO source, d'une première route de sous-réseau mise à jour ou d'une route mise à jour de la première route de sous-réseau à la CCU ou au NCE selon le mode point à point.

3. Procédé selon la revendication 1, dans lequel le procédé comprend en outre :
lorsque la première route de sous-réseau change, la mise à jour, par le nœud CO source, de la première route de sous-réseau ; et
l'annonce, par le nœud CO source, d'une première route de sous-réseau mise à jour ou d'une route mise à jour de la première route de sous-réseau au nœud CO récepteur selon le mode point à point.

4. Procédé selon l'une quelconque des revendications 1 à 3, dans lequel le nœud CO source est défini à l'avance ou automatiquement identifié en tant qu'élément de réseau limite entre le premier réseau d'agrégation de zone métropolitaine et le premier réseau d'accès CPE de périphérie.

5. Procédé selon l'une quelconque des revendications 1 à 4, dans lequel le procédé comprend en outre :
la réception, par le nœud CO source, d'un paquet de données en provenance du nœud CPE source, dans lequel le paquet de données transporte un identifiant du nœud CPE récepteur ;
l'obtention, par le nœud CO source, du nœud CO récepteur correspondant au nœud CPE récepteur ; et
la recherche locale, par le nœud CO source, d'une table de routage du nœud CO récepteur, et le transfert du paquet de données au nœud CO récepteur sur la base d'une route trouvée, dans lequel le paquet de données transporte un identifiant du nœud CO récepteur et l'identifiant du nœud CPE récepteur.

6. Procédé selon la revendication 5, dans lequel l'obtention, par le nœud CO source, du nœud CO récepteur correspondant au nœud CPE récepteur comprend :
l'envoi, par le nœud CO source, d'un paquet de demandes de route à la CCU ou au NCE, dans lequel le paquet de demandes de route est utilisé pour demander l'obtention du nœud CO récepteur correspondant au nœud CPE récepteur, et le paquet de demandes de route comprend l'identifiant du nœud CPE récepteur ; et
la réception, par le nœud CO source, d'un paquet de réponses de route en provenance de la CCU ou du NCE, dans lequel le paquet de réponses de route comprend l'identifiant du nœud CO récepteur correspondant au nœud CPE récepteur.

7. Procédé selon la revendication 5 ou 6, dans lequel l'obtention, par le nœud CO source, du nœud CO récepteur correspondant au nœud CPE récepteur comprend :
la réception, par le nœud CO source, d'une seconde route de sous-réseau en provenance du nœud CO récepteur selon le mode point à point, dans lequel la seconde route de sous-réseau est une route du second réseau d'accès CPE de périphérie, la seconde route de sous-réseau comprend des informations de route entre le nœud CO récepteur et un ou plusieurs nœuds CPE récepteurs de l'au moins un nœud CPE récepteur, dans lequel les informations de route sont générées par le nœud CO récepteur après que le ou les nœuds CPE récepteurs sont mis en ligne en séquence, et le nœud CO récepteur est un élément de réseau limite entre le second réseau d'agrégation de zone métropolitaine et le second réseau d'accès CPE de périphérie ; et
l'interrogation locale, par le nœud CO source, de la table de routage pour obtenir le nœud CO récepteur correspondant au nœud CPE récepteur.

8. Procédé de routage de réseau à grande échelle, dans lequel un réseau à grande échelle comprend un réseau de cœur dorsal dans lequel les informations d'une table de routage à l'échelle du réseau sont conservées dans la zone dorsale, un réseau d'agrégation de zone métropolitaine dans lequel seules des informations de table de routage dans la zone sont conservées dans la zone métropolitaine, et un réseau d'accès à un équipement des locaux d'abonné, CPE, de périphérie, dans lequel le réseau de cœur dorsal comprend une unité de commande centrale, CCU, ou un moteur de nuage de réseau, NCE, le réseau d'agrégation de zone métropolitaine comprend un premier réseau d'agrégation de zone métropolitaine et un second réseau d'agrégation de zone métropolitaine, et le réseau d'accès CPE de périphérie comprend un premier réseau d'accès CPE de périphérie et un second réseau d'accès CPE de périphérie, dans lequel le premier réseau d'accès CPE de périphérie comprend au moins un nœud CPE source, un élément de réseau limite entre le premier réseau d'agrégation de zone métropolitaine et le premier réseau d'accès CPE de périphérie comprend un nœud de Center Office, CO, source, le second réseau d'accès CPE de périphérie comprend au moins un nœud CPE récepteur, et un élément de réseau limite entre le second réseau d'agrégation de zone métropolitaine et le second réseau d'accès CPE de périphérie comprend un nœud CO récepteur, et le procédé comprend :
la réception d'une route par le nœud CO récepteur en provenance du nœud CPE récepteur ;
la génération (S621), par le nœud CO récepteur, d'une seconde route de sous-réseau, dans lequel la seconde route de sous-réseau est une route du second réseau d'accès CPE de périphérie, la seconde route de sous-réseau comprend des informations de route entre le nœud CO récepteur et un ou plusieurs nœuds CPE récepteurs de l'au moins un nœud CPE récepteur, dans lequel les informations de route sont générées par le nœud CO récepteur après que le ou les nœuds CPE récepteurs sont mis en ligne en séquence,
l'annonce, par le nœud CO récepteur, de la seconde route de sous-réseau au ou aux nœuds CPE récepteurs ; et
l'annonce, par le nœud CO récepteur, de la seconde route de sous-réseau selon un mode point à point ;
dans lequel l'annonce, par le nœud CO récepteur, de la seconde route de sous-réseau selon un mode point à point comprend :
l'annonce (S622), par le nœud CO récepteur, de la seconde route de sous-réseau à l'unité de commande centrale, CCU, ou au moteur de nuage de réseau, NCE, selon le mode point à point ; ou
l'annonce (S623), par le nœud CO récepteur, de la seconde route de sous-réseau au nœud CO source selon le mode point à point.

9. Procédé selon la revendication 8, dans lequel le procédé comprend en outre :
lorsque la seconde route de sous-réseau change, la mise à jour, par le nœud CO récepteur, de la seconde route de sous-réseau ; et
l'annonce, par le nœud CO récepteur, d'une seconde route de sous-réseau mise à jour ou d'une route mise à jour de la seconde route de sous-réseau à la CCU ou au NCE selon un mode point à point.

10. Système de réseau optique, comprenant : un réseau de cœur dorsal dans lequel des informations d'une table de routage à l'échelle du réseau sont conservées dans la zone dorsale, un réseau d'agrégation métropolitain dans lequel seules des informations de table de routage dans la zone sont conservées dans la zone métropolitaine, et un réseau d'accès à un équipement des locaux d'abonné, CPE, de périphérie, le réseau de cœur dorsal comprend une unité de commande centrale, CCU, ou un moteur de nuage de réseau, NCE, le réseau d'agrégation de zone métropolitaine comprend un premier réseau d'agrégation de zone métropolitaine et un second réseau d'agrégation de zone métropolitaine, et le réseau d'accès CPE de périphérie comprend un premier réseau d'accès CPE de périphérie et un second réseau d'accès CPE de périphérie, dans lequel le premier réseau d'accès CPE de périphérie comprend au moins un nœud CPE source, un élément de réseau limite entre le premier réseau d'agrégation de zone métropolitaine et le premier réseau d'accès CPE de périphérie comprend un nœud de Center Office, CO, source, le second réseau d'accès CPE de périphérie comprend au moins un nœud CPE récepteur, et un élément de réseau limite entre le second réseau d'agrégation de zone métropolitaine et le second réseau d'accès CPE de périphérie comprend un nœud CO récepteur ; et
dans lequel le nœud CPE source est configuré pour libérer une route du nœud CPE source de telle sorte qu'un nœud CO source reçoit la route en provenance du nœud CPE source et pour générer un première route de sous-réseau, dans lequel la première route de sous-réseau est une route du réseau d'accès CPE de périphérie, la première route de sous-réseau comprend des informations de route entre un ou plusieurs nœuds CPE sources de l'au moins un parmi les nœuds CPE sources et le nœud CO source dans lequel les informations de route sont générées par le nœud CO source après que le ou les nœuds CO sources sont mis en ligne en séquence, dans lequel le nœud CO source est un élément de réseau limite entre le réseau d'agrégation de zone métropolitaine et le réseau d'accès CPE de périphérie ;
le nœud CPE source est configuré pour envoyer un paquet de données au nœud CO source par le biais d'une route par défaut, dans lequel le paquet de données transporte un identifiant du nœud CPE récepteur ;
le nœud CPE récepteur est configuré pour libérer une route du nœud CPE récepteur de telle sorte qu'un nœud CO récepteur reçoit la route en provenance du nœud CPE récepteur et pour générer une seconde route de sous-réseau, dans lequel la seconde route de sous-réseau est une route du second réseau d'accès CPE de périphérie, la seconde route de sous-réseau comprend des informations de route entre le nœud CO récepteur et un ou plusieurs nœuds CPE récepteurs de l'au moins un nœud CPE récepteur dans lequel les informations de route sont générées par le nœud CO récepteur après que le ou les nœuds CPE récepteurs sont mis en ligne en séquence, le nœud CO source est configuré pour réaliser les étapes du procédé selon la revendication 1 ; et
le nœud CO récepteur est configuré pour réaliser les étapes du procédé selon la revendication 8.
